# EUROPEAN PATENT APPLICATION

(11) **EP 4 753 331 A1**
(43) Date of publication of application: **03.06.2026**
(21) Application number: 24872992.3
(22) Date of filing: 26.09.2024
(51) Int. Cl.: H04W 36/18, H04W 36/00, H04W 36/08, H04W 76/15, H04W 84/12

(54) **ROAMING AP RECOMMENDATION IN WIRELESS LAN SYSTEM**

(30) Priority: 26.09.2023 KR 20230129611
(71) Applicant: LG Electronics Inc., Yeongdeungpo-gu Seoul 07336 (KR)
(72) Inventor: YOON, Yelin, Seoul 06772 (KR); CHOI, Jinsoo, Seoul 06772 (KR); JANG, Insun, Seoul 06772 (KR); BAEK, Sunhee, Seoul 06772 (KR); KIM, Geonhwan, Seoul 06772 (KR); CHA, Dongju, Seoul 06772 (KR)
(74) Representative: Jung, Minkyu
(86) International application number: PCT/KR2024/014633
(87) International publication number: WO 2025/071284

(57) **Abstract**

The present disclosure relates to roaming access point (AP) recommendation in a wireless LAN system. According to an embodiment of the present disclosure, provided is a method comprising the steps of: performing an association procedure for a station (STA) and a first access point (AP) that is included in a roaming group; receiving, from the first AP, a list of APs recommended for roaming i n the roaming group; transmitting, to the first AP, a roaming request frame including information on a second AP that the STA prefers for roaming in the list of the APs recommended for roaming; receiving, from the first AP, a roaming response frame including information indicating that the STA's roaming to the second AP is accepted; and performing roaming to the second AP on the basis of the reception of the roaming response frame.

## Description

### Technical field

The present disclosure is related to roaming access point (AP) recommendation in a wireless local area network (WLAN) system.

### Background Art

Next-generation Wi-Fi (e.g., IEEE 802.11be and/or later) aims to support ultra-high reliability in signaling to STAs, and various technologies are being considered to support high throughput, low latency, and extended range. For example, a non-access point (AP) multi-link device (MLD)/station (STA) can perform roaming between MLDs. To perform seamless roaming, a roaming AP recommendation may be required.

### Disclosure of Invention

### Technical Problem

An aspect of the present disclosure is to provide method and apparatus for roaming AP recommendation in a WLAN system.

### Solution to Problem

According to an embodiment of the present disclosure, a method is provided, the method comprising: performing an association procedure for a station (STA) and a first access point (AP) included in a roaming group; receiving, from the first AP, a list of APs for which roaming is recommended in the roaming group; transmitting, to the first AP, a roaming request frame including information for a second AP for which roaming is preferred by the STA in the list of APs for which roaming is recommended; receiving, from the first AP, a roaming response frame including information informing that roaming of the STA to the second AP is accepted; and performing roaming to the second AP based on receiving the roaming response frame.

According to an embodiment of the present disclosure, a method is provided, the method comprising: performing an association procedure for a station (STA) and a first access point (AP) included in a roaming group; transmitting, to the STA, a list of APs for which roaming is recommended in the roaming group; receiving, from the STA, a roaming request frame including information for a second AP for which roaming is preferred by the STA in the list of APs for which roaming is recommended; and transmitting, to the STA, a roaming response frame including information informing that roaming of the STA to the second AP is accepted.

In various embodiments, apparatuses implementing the above methods are provided.

### Advantageous Effect

The present disclosure may have various advantageous effects.

For example, the AP can appropriately determine and provide a list of APs recommended for roaming to the STA based on information for APs capable of roaming recommendations, and the STA can perform roaming quickly and stably to a preferred AP based on the list of APs recommended for roaming.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### Brief Description of Drawings

FIG. 1 shows an example of a transmitting apparatus and/or receiving apparatus of the present disclosure.
FIG. 2 is a conceptual view illustrating the structure of a wireless local area network (WLAN).
FIG. 3 illustrates a general link setup process.
FIG. 4 shows an example of a multi-link (ML).
FIG. 5 shows a modified example of a transmitting device and/or a receiving device of the present disclosure.
FIG. 6 shows an operation related to UL-MU.
FIG. 7 shows an example of a MAC frame header.
FIG. 8 shows the Over-the-Air (OTA) FT protocol in a Robust Security Network (RSN).
FIG. 9 shows a high-level architecture of the AP MLD.
FIG. 10 shows an example of a high-level architecture for UHR AP MLD.
FIG. 11 shows another example of an upper-layer architecture for a UHR AP MLD.
FIG. 12 shows the deployment of AP MLDs for roaming.
FIG. 13 shows an example of an RNR IE.
FIG. 14 shows another example of the RNR IE.
FIG. 15 shows another example of an RNR IE.
FIG. 16 shows an example of a method performed by a STA according to an embodiment of the present disclosure.
FIG. 17 shows an example of a method performed by an AP according to an embodiment of the present disclosure.
FIG. 18 shows an example of a transmission and reception process performed by an AP and a STA according to an embodiment of the present disclosure.
FIG. 19 shows an example of the structure of an ML probe request frame when the Common Info field includes a roaming recommendation enabled field according to an embodiment of the present disclosure.
FIG. 20 shows an example of the structure of an ML probe request frame when the Link Info field includes a roaming recommendation enabled field according to an embodiment of the present disclosure.
FIG. 21 shows an example of the Common Information field of the Reconfiguration Multi-Link IE according to an embodiment of the present disclosure.
FIG. 22 shows an example of the link information field of the reconfiguration multi-link IE according to an embodiment of the present disclosure.
FIG. 23 shows an example in which the UHR MLD MAC address, UHR AP MLD ID, and AP MLD ID are included in the common information field of the Reconfiguration Multi-Link IE according to an embodiment of the present disclosure.
FIG. 24 shows an example in which the UHR MLD MAC address and AP MLD ID are included in the common information field of the Reconfiguration Multi-Link ID according to an embodiment of the present disclosure.
FIG. 25 shows an example in which the link information field of the Reconfiguration Multi-Link IE includes the UHR MLD MAC address, the UHR AP MLD ID, and the AP MLD ID according to an embodiment of the present disclosure.
FIG. 26 shows an example in which the AP MLD ID is included in the Link Information field of the Reconfiguration Multi-Link IE according to an embodiment of the present disclosure.
FIG. 27 shows another example in which the UHR AP MLD ID and AP MLD ID are included in the link information field of the Reconfiguration Multi-Link IE according to an embodiment of the present disclosure.
FIG. 28 shows another example in which the AP MLD ID is included in the Link Information field of the Reconfiguration Multi-Link IE according to an embodiment of the present disclosure.
FIG. 29 shows an example in which the Temporary field is included in the Common Information field of the Reconfiguration ML IE according to an embodiment of the present disclosure.
FIG. 30 shows an example in which the Temporary field is included in the Link Information field of the Reconfiguration ML IE according to an embodiment of the present disclosure.
FIG. 31 shows another example in which a temporary field is included in the link information field of a reconfiguration ML IE according to an embodiment of the present disclosure.
FIG. 32 shows an example where the AP removal timer is included in the Common Info field of the Reconfiguration ML IE.
FIG. 33 shows an example of the Common Info field structure of the Basic ML IE.
FIG. 34 shows an example of the Link Info field structure of the Basic ML IE.
FIG. 35 shows an example of the Group Key Information field.
FIG. 36 shows the procedure for determining whether an N_AP is capable of roaming using the Collocation Enabled field.
FIG. 37 shows the procedure of determining whether roaming to the N_AP is enabled using the Collocation ID.
FIG. 38 shows the MLD roaming procedure when the UHR AP MLD ID is included in the reconfiguration element.
FIG. 39 shows the MLD roaming procedure when the UHR AP MLD ID is not included in the reconfiguration element.
FIG. 40 shows an example of a collocated AP set.
FIG. 41 shows an example 1 of the MLD roaming procedure. Example 1 corresponds to a case where only some STAs roam to an AP first.
FIG. 42 shows the operational flow of example 1 for the MLD roaming procedure.
FIG. 43 shows example 2 of the MLD roaming procedure.
FIG. 44 shows the operational flow of example 2 for the MLD roaming procedure.
FIG. 45 shows example 3 of the MLD roaming procedure.
FIG. 46 shows example 4 of the MLD roaming procedure.
FIG. 47 shows the operational flows of examples 3 and 4 for the MLD roaming procedure.
FIG. 48 shows an example of how to set the type field of an MLD roaming request frame when simultaneously transmitting link addition and deletion requests.
FIG. 49 shows another example of a method for setting the type field of an MLD roaming request frame when simultaneously transmitting link addition and deletion requests.
FIG. 50 shows an example of MLD roaming using TIM.
FIG. 51 shows the operational flow for the MLD roaming procedure using the TIM.

### Mode for the Invention

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

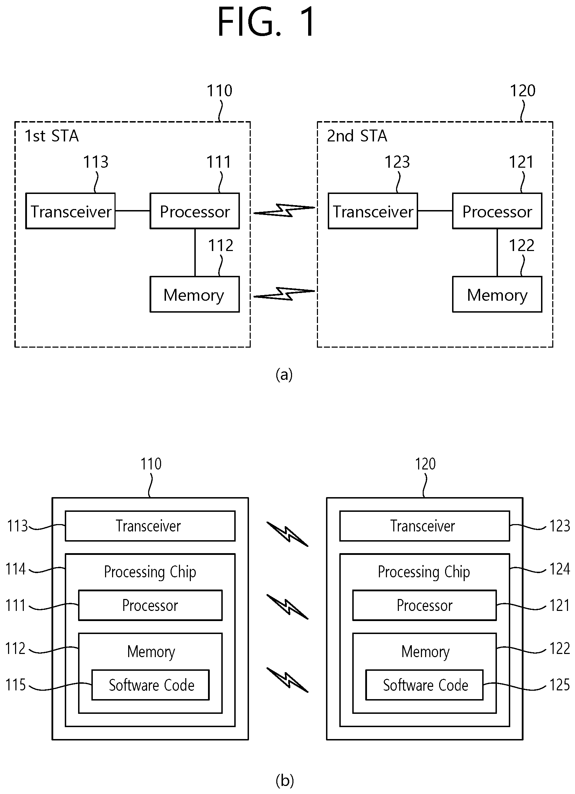

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGON^{®} series of processors made by Qualcomm^{®}, EXYNOS^{®} series of processors made by Samsung^{®}, A series of processors made by Apple^{®}, HELIO^{®} series of processors made by MediaTek^{®}, ATOM^{®} series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

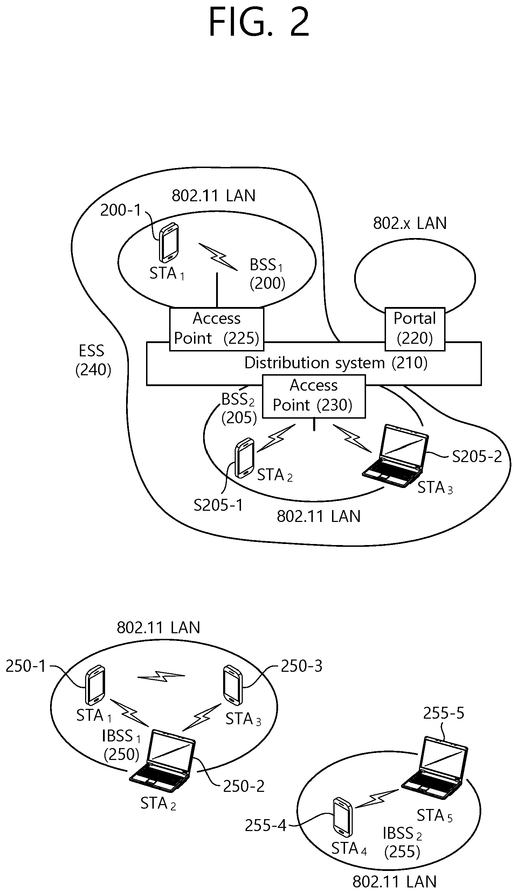

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, APs providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

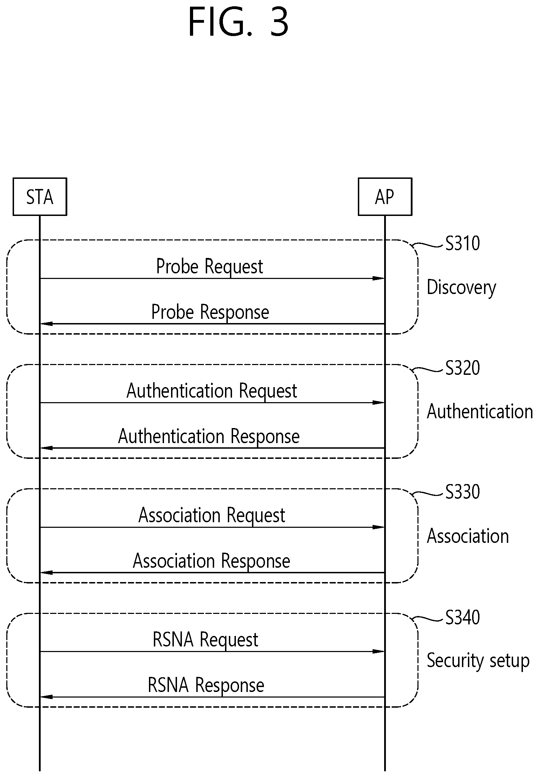

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

Below, multi-link (ML) is described.

Terms related to multi-link are defined as follows:
- A multi-link device (MLD) can support multiple affiliated STAs, operate using one or more affiliated STAs, and provide a single MAC data service and a single MAC service access point (SAP) to the logical link control (LLC) lower layer.
- Multi-link operation (MLO) may refer to tasks such as discovery, authentication, multi-link setup, and frame exchange between two MLDs;
- An affiliated STA is a STA that provides link-specific lower-level MAC and PHY services within an MLD. It may be an access point (AP) STA or a non-access point (non-AP) STA;
- An AP MLD is an MLD in which each affiliated STA is an AP;
- A non-AP MLD is an MLD in which each affiliated STA is a non-AP STA;
- An affiliated AP is an AP STA affiliated with an AP MLD;
- An affiliated non-AP STA is a non-AP STA affiliated with a non-AP MLD.

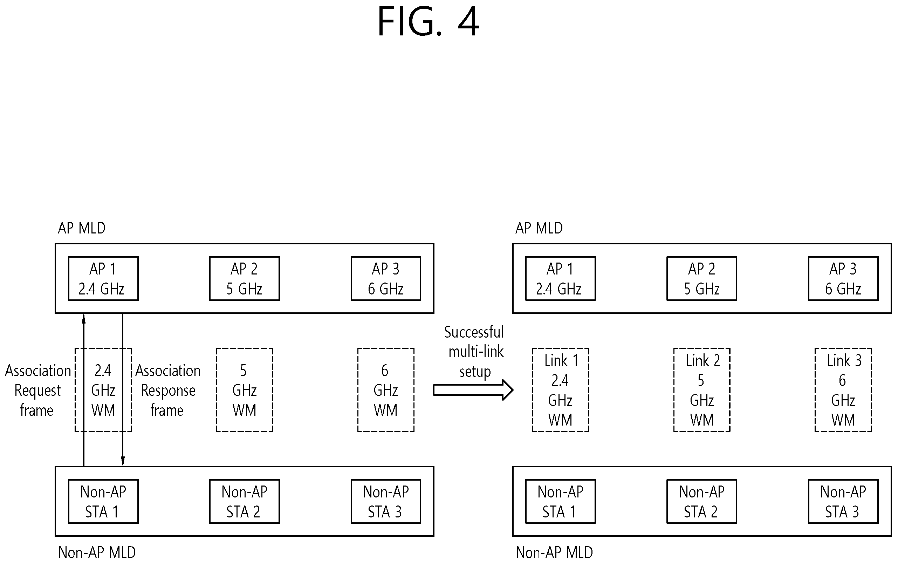

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4,AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2. Once ML setup is completed, an enabled link for ML communication may be determined. A STA may exchange frames through at least one of the multiple links determined as enabled links. For example, an enabled link can be used for at least one of a management frame, a control frame, or a data frame.

If a single STA supports multiple links, the transmitting and receiving devices supporting each link can operate as a single logical STA. For example, a single STA supporting two links can be represented by a single Multi-Link Device (MLD) that includes a first STA for the first link and a second STA for the second link. For example, a single AP supporting two links can be represented by a single AP MLD that includes a first AP for the first link and a second AP for the second link. Furthermore, a non-AP supporting two links can be represented by a non-AP MLD that includes a first STA for the first link and a second STA for the second link.

More specific features regarding ML setup are described below.

An MLD (AP MLD and/or non-AP MLD) can transmit information about links that the MLD can support through ML setup. The information about the links can be configured in various ways. For example, the information about the links can include at least one of 1) information about whether the MLD (or STA) supports simultaneous RX/TX operation, 2) information about the number/upper limit of uplink/downlink links supported by the MLD (or STA), 3) information about the location/band/resource of uplink/downlink links supported by the MLD (or STA), 4) information about the type of frame (management, control, data, etc.) available or preferred in at least one uplink/downlink Link, 5) information about ACK policy available or preferred in at least one uplink/downlink Link, and 6) information about a traffic identifier (TID) available or preferred in at least one uplink/downlink Link. TID is related to the priority of traffic data and is expressed as eight types of values according to the existing wireless LAN standard. That is, eight TID values can be defined corresponding to four access categories (AC) (AC_BK (background), AC_BE (best effort), AC_VI (video), AC_VO (voice)) according to the existing wireless LAN standard.

For example, all TIDs can be pre-configured to be mapped to uplink/downlink links. Specifically, if negotiation is not achieved through ML setup, all TIDs are used for ML communication. If the mapping between uplink/downlink links and TIDs is negotiated through additional ML setup, the negotiated TID can be used for ML communication.

Through ML setup, multiple links can be established for use by the transmitting and receiving MLDs involved in ML communication, and these can be referred to as "enabled links." An "enabled link" can be referred to in various ways, such as "First Link," "Second Link," "Transmit Link," or "Receive Link."

After ML setup is completed, the MLD can update the ML setup. For example, if link information needs to be updated, the MLD can transmit information about the new link. Information about the new link can be transmitted based on at least one of a management frame, a control frame, or a data frame.

The specific features of the present disclosure are not limited to the specific features of FIG. 4. That is, the number of links can be defined in various ways, and multiple links can be defined in various ways within at least one band.

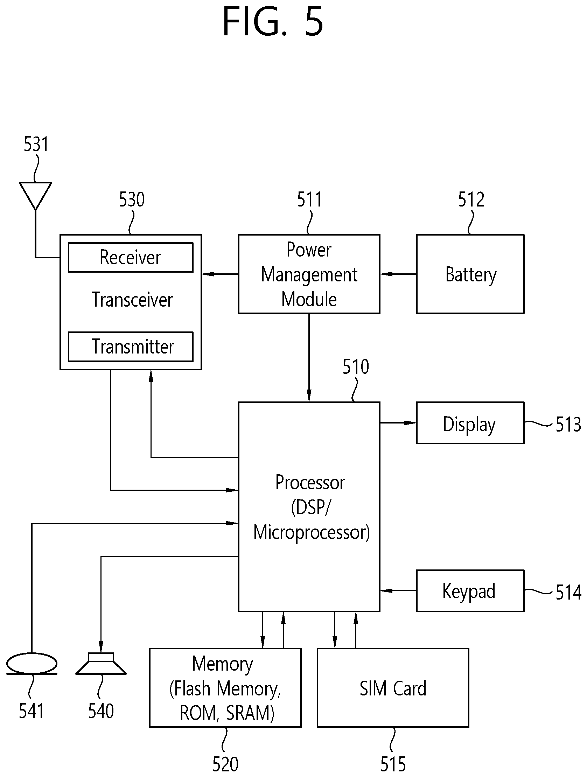

FIG. 5 shows a modified example of a transmitting device and/or a receiving device of the present disclosure.

The devices (e.g., AP STA, non-AP STA) shown in FIGS. 1 to 4 can be modified as shown in FIG. 5. The transceiver 530 of FIG. 5 can be identical to the transceiver 113, 123 of FIG. 1. The transceiver 530 of FIG. 5 can include a receiver and a transmitter.

The processor 510 of FIG. 5 can be identical to the processor 111, 121 of FIG. 1. Alternatively, the processor 510 of FIG. 5 can be identical to the processing chip 114, 124 of FIG. 1.

The memory 150 of FIG. 5 may be the same as the memory 112, 122 of FIG. 1. Alternatively, the memory 150 of FIG. 5 may be a separate external memory different from the memory 112, 122 of FIG. 1.

Referring to FIG. 5, the power management module 511 manages power for the processor 510 and/or the transceiver 530. The battery 512 supplies power to the power management module 511. The display 513 outputs the result processed by the processor 510. The keypad 514 receives input to be used by the processor 510. The keypad 514 may be displayed on the display 513. The SIM card 515 may be an integrated circuit used to securely store an international mobile subscriber identity (IMSI) and its associated keys, which are used to identify and authenticate subscribers in mobile devices such as mobile phones and computers.

Referring to FIG. 5, the speaker (540) may output sound-related results processed by the processor 510. The microphone (541) may receive sound-related input to be used by the processor 510.

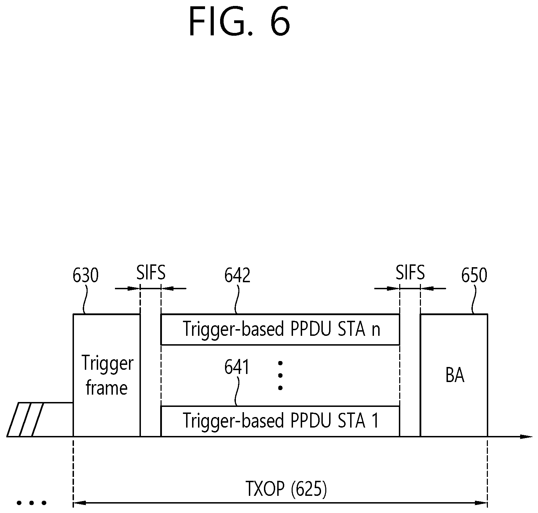

FIG. 6 shows an operation related to UL-MU. As shown, a transmitting STA (e.g., AP) can obtain TXOP 625 by performing channel access through contending (i.e., backoff operation) and transmit trigger frame 630. That is, the transmitting STA (e.g., AP) can transmit PPDU including trigger frame 630. When PPDU including trigger frame is received, trigger-based (TB) PPDU is transmitted after delay of SIFS.

TB PPDU 641, 642 can be transmitted at the same time and transmitted from multiple STA (e.g., user STA) whose AID is indicated in trigger frame 630. ACK frame 650 for TB PPDU can be implemented in various forms. For example, ACK frame 650 for TB PPDU can be implemented in the form of block ACK (BA).

In FIG. 6, transmission(s) of trigger Frame 630, TB PPDU 641, 642 and/or ACK Frame 650 can be performed within TXOP 625.

The structure and types/subtypes of MAC frames are described below.

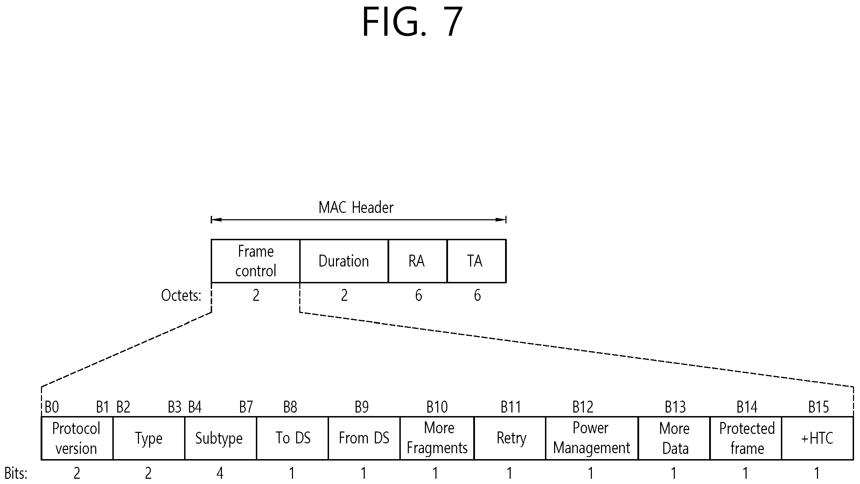

FIG. 7 shows an example of a MAC frame header. As shown, a MAC frame may include a 2-octet frame control field/information, a 2-octet duration field/information, a 6-octet receiver address (RA) field/information, and a 6-octet transmitter address (TA) field/information. As shown in FIG. 7, the four fields may be contiguous. The MAC header of FIG. 7 may be modified in various ways, with new fields inserted between the four fields shown, or at least one of the fields shown may be omitted.

The MAC header shown in FIG. 7 may be positioned at the very beginning of the MAC frame. That is, the MAC frame may include a MAC header as shown in FIG. 7 and a MAC body field/information may be contiguous to the MAC header. A MAC frame including the MAC header of FIG. 7 is inserted/included in the data field of a PPDU (e.g., a UHR PPDU).

The MAC frames included in the data field of the PPDU of the present disclosure can be classified into various types. For example, the MAC frames of the present disclosure can be classified into control frames, management frames, and data frames.

For example, the management frame includes Association Request, Association Response, Reassociation Request, Reassociation Response, Probe Request, Probe Response, Beacon, Disassociation, Authentication, and Deauthentication frames/signals defined in conventional WLANs. For the management frame, the value of the type field (B3 and B2) of the MAC header is set to 00. Additionally, the values of the subtype fields (B7, B6, B5, B4) of the MAC header are as follows: Association Request (0000), Association Response (0001), Reassociation Request (0010), Reassociation Response (0011), Probe Request (0100), Probe Response (0101), Beacon (1000), Disassociation (1010), Authentication (1011), Deauthentication (1100).

For example, the control frame includes the Trigger Beamforming Report Poll, NDP Announcement (NDPA), Control Frame Extension, Control Wrapper, BlockAck Request (BlockAckReq), BlockAck (BlockAck), PS-Poll, RTS, CTS, Ack, and CF-End frames/signals defined in conventional WLANs. For the control frame, the values of the type fields (B3 and B2) of the MAC header are set to 01. Additionally, the values of the subtype fields (B7, B6, B5, B4) of the MAC header are as follows: Trigger (0010), Beamforming Report Poll (0100), NDP Announcement (0101), Control Frame Extension (0110), Control Wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc., as defined in conventional WLANs. For this data frame, the values of the type fields (B3 and B2) of the MAC header are set to 10.

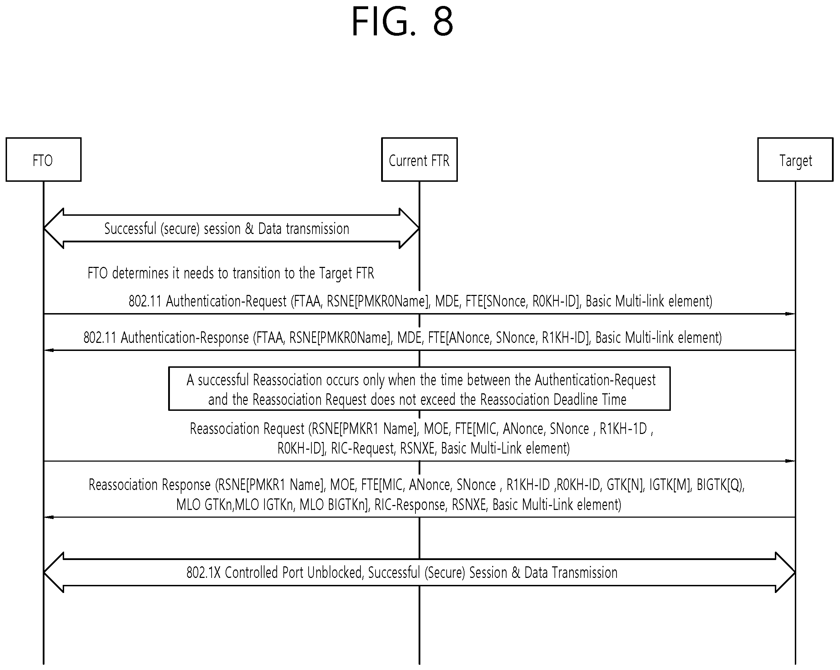

FIG. 8 shows the Over-the-Air (OTA) FT protocol in a Robust Security Network (RSN).

Currently, in 802.11, when a non-AP STA moves from an AP (Old AP) to another AP (New AP), i.e., a Basic Service Set (BSS) transition, it must undergo a reassociation process within the same mobility area. A representative example is the Fast BSS Transition (FT) technology. FT involves several processes, including authentication and reassociation between the FT Originator (FTO) and the Target FT Responder (FTR) (i.e., the New AP), as shown in FIG. 8.

After this process, many operational parameters, such as the agreement related to BlockAck (BA) and Stream Classification Service (SCS), Sequence Number (SN), and EDCAF parameters are reset. Accordingly, there is the overhead of having to re-perform agreement/configuration along with multiple frame exchanges, and data loss may also occur during the FT process. Furthermore, seamless mobility is not easy for non-AP STAs. Therefore, to address this issue, the present disclosure proposes a seamless roaming method utilizing an AP Multi-Link Device (MLD). Unlike FT, roaming does not require re-authentication/association processes.

In the present disclosure, a non-AP MLD/STA can roam from a serving/source AP MLD to another AP MLD (i.e., a target AP MLD). Alternatively, a non-AP MLD/STA can roam from at least one AP in the serving/source AP MLD to at least one AP in another AP MLD (i.e., a target AP MLD). At this time, the non-AP MLD/STA can maintain an associated state and authenticated state during and after roaming to another AP MLD. Roaming may include establishing a link with at least one AP of the target AP MLD and/or releasing a link with at least one AP of the serving/source AP MLD. For example, the non-AP MLD/STA may release a link with at least one AP of the serving/source AP MLD after establishing a link with at least one AP of the target AP MLD. As another example, the non-AP MLD/STA may release a link with at least one AP of the serving/source AP MLD and then establish a link with at least one AP of the target AP MLD.

In this disclosure, a STA performing a BSS transition (e.g., roaming) is referred to as a RSTA. The AP with which STA is currently associated when the STA roams is referred to as the Old AP (O_AP), and the AP to which the STA will roam is referred to as the New AP (N_AP). Furthermore, the roaming method proposed in this disclosure is referred to as MLD roaming. The designations (names) in this disclosure may vary, and the STA may include AP STAs and/or non-AP STAs.

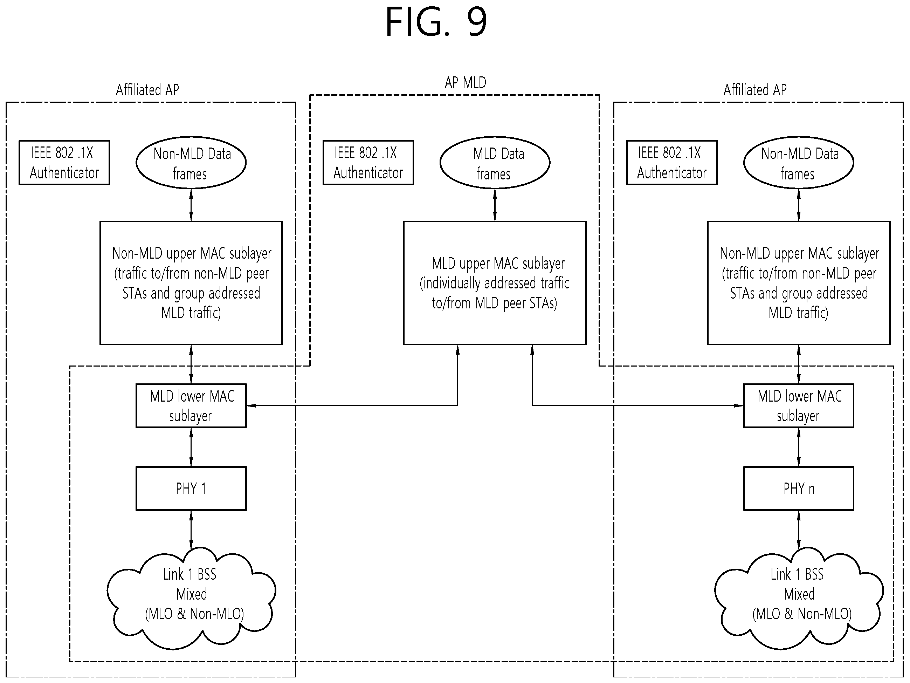

FIG. 9 shows a high-level architecture of the AP MLD.

Referring to FIG. 9, the AP MLD may include at least one AP. The MLD may control various procedures/parameters common to multiple APs using the upper MAC layer/sublayer. For example, the MLD may perform/control authentication, association, sequence number (SN)/packet number (PN) allocation, and power-saving buffering of individually addressed frames.

Therefore, when the AP MLD function is used, MLD-level parameters can be maintained without being reset when a non-AP MLD/STA moves/roams between APs associated with the AP MLD. This disclosure proposes a roaming method that utilizes the functionality of AP MLD.

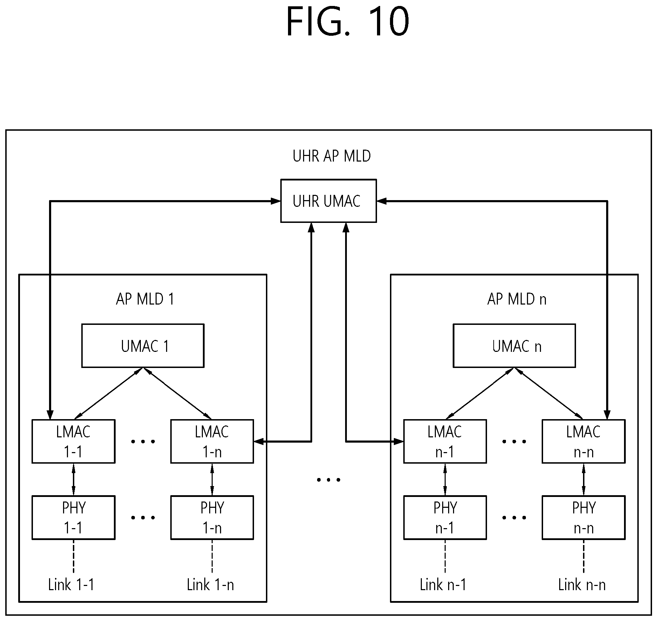

FIG. 10 shows an example of a high-level architecture for UHR AP MLD.

In FIG. 10, APs can support seamless roaming. In order to support seamless roaming, compatibility with devices of previous standard versions shall be ensured, and seamless roaming among a large number of devices shall be supported. First, to ensure legacy compatibility with previous devices, non-UHR non-AP STAs must be able to recognize non-UHR APs. To achieve this, the MLD definitions must not be violated the definitions specified for the MLD shall not be violated, and the existing architecture must not be modified. Therefore, as shown in FIG. 10, a UHR AP MLD can be defined that maintains the architecture of the existing MLD while hierarchically affiliating MLDs capable of seamless roaming. In this case, each LMAC of the AP MLDs has an interface with the UHR UMAC, and the functions of the UMAC of the AP MLD performing seamless roaming can be managed by the UHR UMAC. This architecture can also resolve scalability issues caused by the limitation of the bit size of the link ID. Basically, the link ID is 4 bits and can only support a maximum of 16 link IDs. This link ID is required to move from one link to another during roaming, but the existing method limits the number of roaming APs to 16. To address this issue, link IDs are grouped by AP MLD ID, thereby addressing the scalability issue.

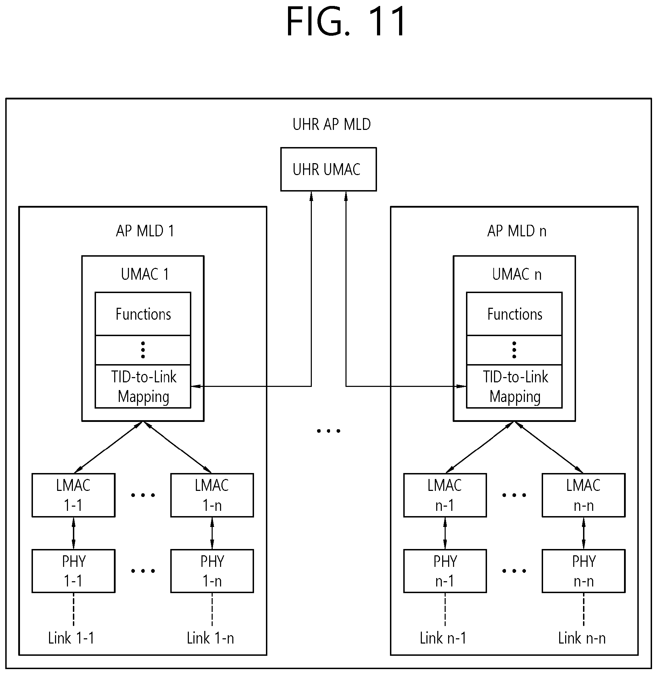

FIG. 11 shows another example of an upper-layer architecture for a UHR AP MLD.

FIG. 11 shows an example with a similar architecture to FIG. 10, but with different interfacing. FIG. 11 shows that the LMAC of the AP MLD and the UHR UMAC are not directly connected, but rather interfaced to the TID-to-Link mapping function of the UMAC. This architecture allows for TID-to-Link mapping to be performed individually in the UMAC of the AP MLD or in the UHR UMAC. There are no restrictions on how this architecture is utilized and the types and number of functions interfaced with the UHR UMAC.

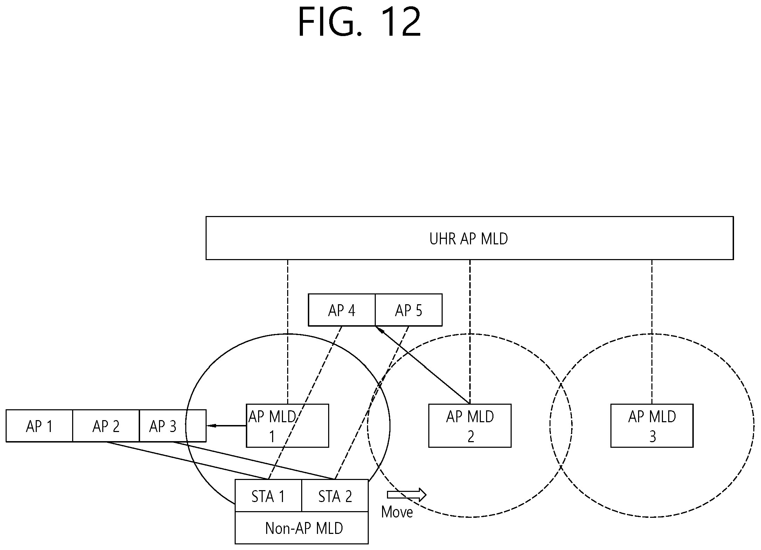

The deployment of AP MLDs for roaming is shown in FIG. 12.

FIG. 12 shows the deployment of AP MLDs for roaming.

Referring to FIG. 12, each AP MLD is located in a different location, i.e., non-collocated, while the APs belonging to/affiliated with each AP MLD are located in the same or similar locations, i.e., collocated. Collocated APs may mean they belong to the same physical device, or they may be logically located in similar locations, even if they are not on the same physical device. Basically, since an AP MLD is a logical entity, it can be any single physical device, but it can function as an MLD that covers affiliated APs regardless of location and can apply MLO. Ultimately, all APs belonging to each AP MLD can be affiliated with a group-managing AP MLD. For example, AP MLD 1 in FIG. 12 may include affiliated APs 1, AP2, and AP3.

In the present disclosure, AP MLDs including APs affiliated with a group-managing AP MLD can be included in a roaming group, and roaming can be performed between the AP MLDs/APs included in the roaming group. In other words, roaming between AP MLDs included in a roaming group is possible, but roaming between an AP MLD included in a roaming group and an AP MLD not included in the roaming group may not be possible. AP MLDs included in a roaming group may be referred to as group member AP MLDs. For example, in FIG. 12, AP MLD 1, AP MLD 2, and AP MLD 3 may be group member AP MLDs.

When a non-AP MLD/STA moves, the non-AP MLD/STA may roam from one AP MLD to another. For example, if a non-AP MLD has a multi-link setup with an AP MLD, and STA 1 and STA 2 are associated with AP 2 and AP 3 of AP MLD 1, when roaming to AP MLD 2, STA 1 may be associated with AP 4, and STA 2 may be associated with AP 5. In this case, each STA may be temporarily associated with AP 4 and AP 5 so that AP 4 and AP 5 can transmit frames to each STA during the roaming process.

While FIG. 12 shows a non-AP MLD with multiple affiliated STAs, this architecture can also be applied to a non-AP MLD with a single affiliated STA or to a non-AP STA without an MLD.

In the present disclosure, roaming is not limited to mobility between different AP MLDs. For example, a non-AP MLD/STA can change APs through roaming even within an AP MLD.

A UHR AP MLD (or group-managing AP MLD) affiliates at least one (EHT) AP MLD, each of which is non-collocated, and the APs within each AP MLD are collocated. A non-AP MLD (or STA) can roam from one AP MLD to another. A STA can change APs through roaming within a specific AP MLD.

When changing APs within an AP MLD, roaming can be considered as a method of changing links while maintaining the multi-link setup without tearing down the existing multi-link setup.

For roaming, a) announcement procedures and b) frame exchange can be performed.
a) Announcement Procedure: Each AP in the AP MLD announces information related to roaming APs within the AP MLD to STAs, including information indicating whether or not each AP can perform the MLD roaming proposed in this disclosure.
b) Frame Exchange Procedure: A procedure of exchanging frames that can trigger MLD roaming. Upon completion of the frame exchange, MLD roaming is completed based on the exchanged/negotiated information, and operation is no longer performed with the O_AP, but with the N_AP.

In the present disclosure, the following methods can be used for MLD roaming:
- One or more STAs within a non-AP MLD can establish multiple links, each with a wireless transceiver. Therefore, a method in which a single STA adds and deletes links can be used. Therefore, more than one link can be established for a single STA.
- However, since frame exchange is performed only on one link and frame exchange is not possible on the remaining links, the remaining links may be in a doze or disabled state.
- A non-AP MLD can indicate whether it has the capabilities described above when transmitting an association request frame during ML setup or a management frame containing the basic multi-link ML IE. This can be included in the MLD Capabilities and Operations subfield of the common information field if all STAs have this capability, or in the link information field if only some STAs have this capability. For example, "Single-radio ML setup enabled" can be included. "Single-radio ML setup enabled" indicates that STAs in a non-AP MLD can establish multiple links, each with a single radio transceiver. This means that more than one link can be established for a single STA.

### Announcement for MLD Roaming

Each AP in each AP MLD can announce information regarding whether roaming proposed in the present disclosure is possible (e.g., whether frame exchange is possible). The relevant information may include at least one of the following:
- UHR MLD MAC address (or MAC address for roaming group): A MAC address commonly used by AP MLDs included in a roaming group.
- MLD roaming enabled: An indicator indicating whether roaming is possible (e.g., a 1-bit indicator).
- UHR AP MLD ID (or roaming group ID, group ID): An ID that identifies an AP group (i.e., a roaming group) in which MLD roaming can be performed. The configurations for this group ID are as follows:

### A. ID Configuration for Roaming in AP MLD

Basically, an ID can be assigned to the UHR AP MLD (or group-managing AP MLD) that affiliates the collocated AP MLDs. In this disclosure, this is referred to as the UHR AP MLD ID (or group-managing AP MLD ID/roaming group ID/group ID). This UHR AP MLD ID can be unique within the UHR AP MLD/roaming group or within the entire network. Defining the UHR AP MLD ID/group ID to distinguish the UHR AP MLD/roaming group can resolve scalability issues caused by a limited number of links and help identify more APs.

### A-1) Unique ID Configuration within UHR AP MLD in a Network

This clause proposes a method for ensuring that the UHR AP MLD ID is unique within a network. The UHR AP MLD ID can have values such as 0, 1, 2, etc. For example, if the UHR AP MLD ID has 4 bits, it can have values from 0 to 15, and if it has 8 bits, it can have values from 0 to 127, and the bit size can be changed. The following explains the meaning of each UHR AP MLD ID/group ID:
1) If the UHR AP MLD ID/group ID is 0: In this case, the APs with this UHR AP MLD ID/group ID are known to be APs belonging to an AP MLD within the same UHR AP MLD/roaming group. In other words, if a non-AP MLD (or STA) identifies this, it can identify that the APs currently belong to the same UHR AP MLD/roaming group. Therefore, roaming is possible only when the UHR AP MLD ID/group ID is 0. Additionally, since other APs in the multi-BSSID set (transmitted BSSID (TxBSSID) or nontransmitted BSSID (NonTxBSSID)) to which each AP belonging to this UHR AP MLD/roaming group belongs also uses the same physical resources, they are assigned this UHR AP MLD ID/group ID. However, the AP MLD IDs of the AP MLDs (transmitted BSSID (TxBSSID) or nontransmitted BSSID (NonTxBSSID)) to which these APs belong may be different.

The different UHR AP MLD IDs/group IDs are mapped to uniquely identify each UHR AP MLD/roaming group.

### A-2) Unique ID Configuration within AP MLD

This clause proposes a method for assigning unique IDs to APs that can roam within the entire UHR AP MLD/group.
- Temporary Link Addition/Deletion: Indicates whether a link can be temporarily added or deleted for a single STA. This means that one STA can have two or more links for a certain period of time (e.g., indicated by a 1-bit bit).
- Collocation enabled: Indicates whether AP MLDs are collocated (e.g., indicated by a 1-bit bit).

For example, if Collocation enabled = 1, this indicates that the AP and the reporting AP are physically close. Therefore, since communication with the previously associated AP can be possible without transiting to the AP with the value set to 1, roaming is not required if a neighboring AP has Collocation enabled set to 1. In other words, MLD roaming requests/responses are not sent or received to APs with Collocation enabled = 1.
- Collocation ID: This ID identifies collocated AP MLDs. The configurations for this Collocation ID are as follows:

### B. Collocation ID Configuration for Roaming in UHR AP MLD

Basically, collocated AP MLDs can be assigned IDs. These are referred to as a collocation ID in this disclosure. This collocation ID can be unique within a collocated AP MLD set, or can be unique to the collocated AP MLDs within a UHR AP MLD/roaming group.

### B-1. Unique Collocation ID Configuration within the Collocation Set in UHR AP MLD

This clause proposes a method for ensuring that collocation IDs are unique within a collocated AP MLD set. Collocation IDs can typically have values such as 0, 1, 2, etc. For example, a 4-bit collocation ID can have values from 0 to 15, and an 8-bit collocation ID can have values from 0 to 127. The bit size can be changed. The following explains the meaning of each collocation ID:

When the collocation ID is 0: In this case, APs with this collocation ID can be considered to belong to the same collocated AP MLD set. That is, if the MLD (or STA) identifies this, the APs can be identified as currently collocated. Furthermore, since other APs in the multi-BSSID set (transmitted BSSID (TxBSSID) or nontransmitted BSSID (NonTxBSSID)) to which each AP belonging to this set belongs also utilize the same physical resources, they are assigned this collocation ID. However, the AP MLD IDs of the AP MLDs to which these APs belong (transmitted BSSID (TxBSSID) or nontransmitted BSSID (NonTxBSSID)) may be different.

Multiple AP MLDs can be included within a set of APs with the same collocation ID.

Different collocation IDs can be mapped to uniquely identify each collocated AP MLD set.

### B-2) Unique Collocation ID Configuration within UHR AP MLD

This clause proposes a method for assigning a unique collocation ID within a collocated AP MLD set within a UHR AP MLD/roaming group. Basically, the collocation ID can be assigned a value of 0, 1, 2, etc. For example, a 4-bit collocation ID can have a value from 0 to 15, and an 8-bit collocation ID can have a value from 0 to 127. The bit size can be varied.

The above information (e.g., UHR MLD MAC address (or MAC address for the roaming group), MLD roaming enabled, UHRAP MLD ID/group ID, collocation enabled, collocation ID, and temporary link addition/deletion) may be referred to as MLD roaming parameters and/or included within the MLD roaming parameters. MLD roaming parameters can be included in management (MGMT) frames, such as beacon frames and/or probe response frames, and can be included in an MLD roaming IE containing new MLD roaming information or an existing Reduced Neighbor Report (RNR) Information Element (IE).

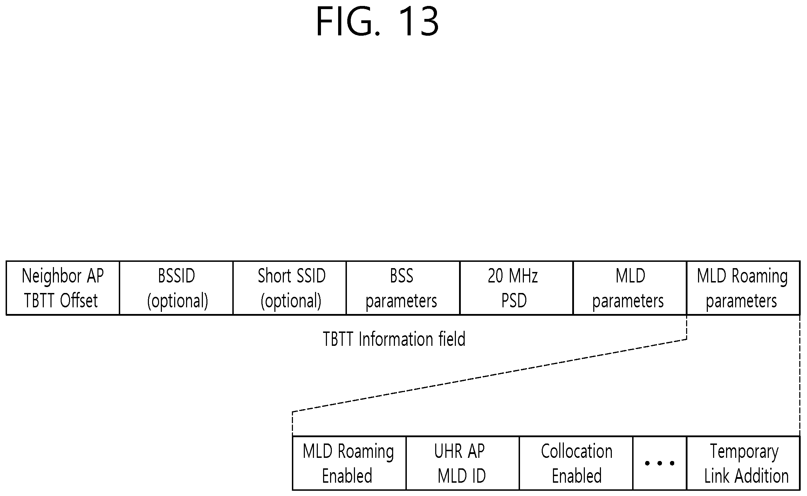

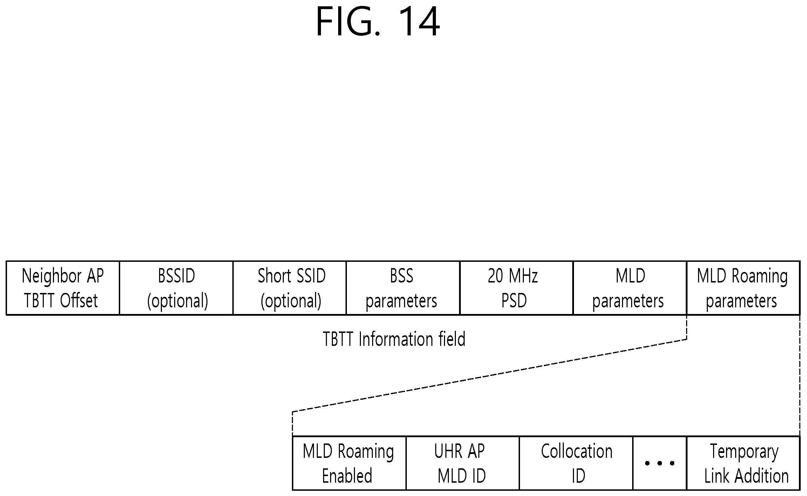

The followings are an example of MLD roaming parameters included in an RNR IE. Basically, MLD roaming parameters can be included in the TBTT information field for each AP. The MLD roaming parameters can include at least one of the fields shown in FIGs. 13 and 14, and the arrangement of the fields can be as shown in FIGs. 13 and 14. Furthermore, in addition to the fields shown in FIGs. 13 and 14, at least one of the fields defined in the present disclosure can be included.

FIG. 13 shows an example of an RNR IE.

Non-AP STAs send and receive MLD roaming requests and responses to only APs with Collocation Enabled = 0 in the RNR IE.

FIG. 14 shows another example of the RNR IE.

Non-AP STAs send and receive MLD roaming requests and responses to only APs with a Collocation ID other than 0 in the RNR IE.

As shown in FIG.s 13 and 14, if the existing MLD parameter subfield is insufficient in size, a new MLD roaming parameter subfield can be added in the RNR IE to contain the information. While changing the size of the existing MLD parameter subfield is possible, this can cause decoding issues for 802.11be STAs. In this case, the MLD roaming parameter subfield may not include MLD roaming Enabled, as including the MLD roaming parameter itself may imply that MLD roaming is enabled.

The RNR IE can indicate only whether another AP is collocated or non-collocated with the AP currently sending a beacon or probe response by including a Collocation Enabled field, as shown in FIG. 13, thereby reducing overhead. Furthermore, as shown in FIG. 14, it can also indicate which AP is included in which collocation set by indicating the AP's Collocation ID. The RNR IE can include at least one of the Collocation Enabled field or the Collocation ID.

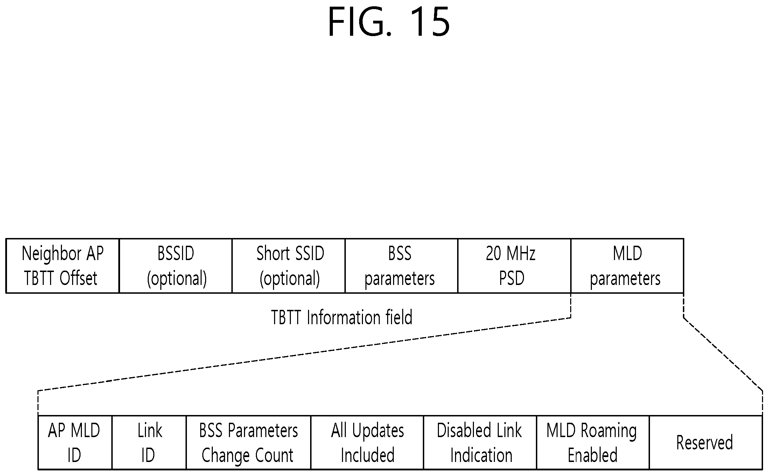

FIG. 15 shows another example of an RNR IE.

If only the MLD roaming availability (i.e., MLD roaming enabled) field is included, as shown in FIG. 15, the MLD roaming Enabled field can be indicated using the existing MLD parameter subfield. Other information can be included in a separate parameter (e.g., MLD roaming parameter), as shown in FIG. 13 or FIG. 14.

Meanwhile, a method for recommending AP(s) to roam to for seamless roaming and a signaling method for related information are required.

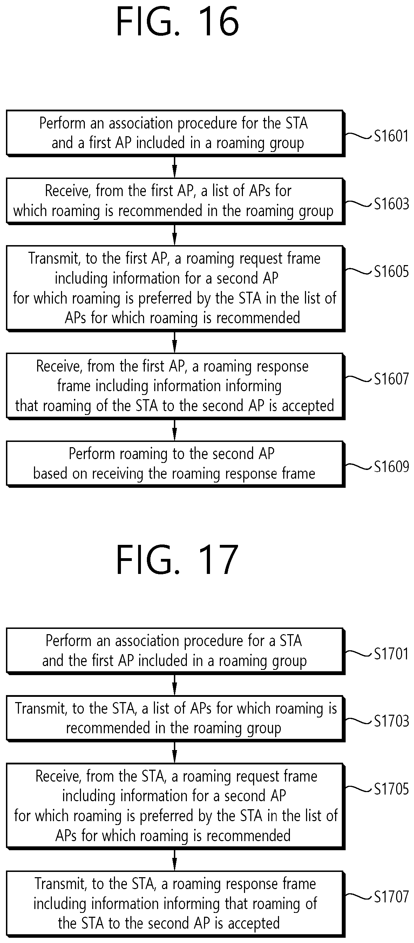

FIG. 16 shows an example of a method performed by a STA according to an embodiment of the present disclosure.

Referring to FIG. 16, in step S1601, the STA may perform an association procedure for the STA and a first AP included in a roaming group.

In step S1603, the STA may receive, from the first AP, a list of APs for which roaming is recommended in the roaming group.

In step S1605, the STA may transmit, to the first AP, a roaming request frame including information for a second AP for which roaming is preferred by the STA in the list of APs for which roaming is recommended.

In step S1607, the STA may receive, from the first AP, a roaming response frame including information informing that roaming of the STA to the second AP is accepted.

In step S1609, the STA may perform roaming to the second AP based on receiving the roaming response frame.

According to various embodiments, the STA may transmit, to the first AP, a probe request frame including information for APs for which roaming recommendation is enabled. The STA may receive, from the first AP, a probe response frame including the list of APs for which roaming is recommended among the APs for which roaming recommendation is enabled.

According to various embodiments, the STA may receive, from the first AP, a management frame including information for APs to which roaming is enabled. The information for the APs to which roaming is enabled is included in a RNR IE of the management frame. The APs for which roaming recommendation is enabled may be selected from among the APs to which roaming is enabled.

According to various embodiments, the probe request frame may be an ML probe request frame including a probe request ML IE. The probe response frame may be an ML probe response frame including a basic ML IE. The information for the APs for which roaming recommendation is enabled may be included in the probe request ML IE. The list of APs for which roaming is recommended may be included in the basic ML IE.

According to various embodiments, the information for the APs for which roaming recommendation is enabled may include a roaming recommendation enabled field for the APs for which roaming recommendation is enabled. The roaming recommendation enabled field may be included in a common information field of the probe request ML IE. A presence bitmap subfield of the probe request ML IE may include a field indicating that the roaming recommendation enabled field is included in the common information field of the probe request ML IE.

According to various embodiments, the information for the APs for which roaming recommendation is enabled may include a roaming recommendation enabled field for each of the APs for which roaming recommendation is enabled. The roaming recommendation enabled field may be included in a per-STA profile subelement for a corresponding AP in a link information field of the probe request ML IE.

According to various embodiments, the roaming recommendation enabled field may be included in a STA control field of the per-STA profile subelement for the corresponding AP.

According to various embodiments, the roaming recommendation enabled field may be included in a STA information field of the per-STA profile subelement for the corresponding AP. The STA control field of the per-STA profile subelement for the corresponding AP may include a field indicating that the roaming recommendation enabled field is included in the STA information field.

According to various embodiments, the STA may receive, from the first AP, a beacon frame including the list of APs for which roaming is recommended.

According to various embodiments, the list of APs for which roaming is recommended may include a list of link IDs associated with the APs for which roaming is recommended.

According to various embodiments, the information for the second AP may include at least one of a link ID associated with the second AP or an AP MLD ID with which the second AP is affiliated.

According to various embodiments, at least one of the information for the second AP or the roaming request frame may include a group ID for the roaming group.

According to various embodiments, the performing of roaming to the second AP may comprise performing a link switch to the second AP while maintaining an association state.

FIG. 17 shows an example of a method performed by an AP according to an embodiment of the present disclosure. The AP in FIG. 17 may be a first AP.

Referring to FIG. 17, in step S1701, the first AP may perform an association procedure for a STA and the first AP included in a roaming group.

In step S1703, the first AP may transmit, to the STA, a list of APs for which roaming is recommended in the roaming group.

In step S1705, the first AP may receive, from the STA, a roaming request frame including information for a second AP for which roaming is preferred by the STA in the list of APs for which roaming is recommended.

In step S1707, the first AP may transmit, to the STA, a roaming response frame including information informing that roaming of the STA to the second AP is accepted.

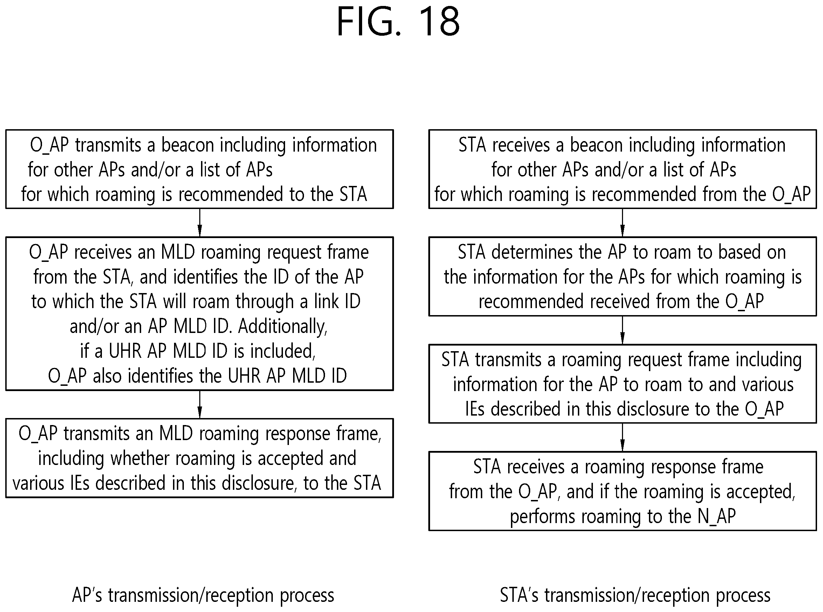

FIG. 18 shows an example of a transmission and reception process performed by an AP and a STA according to an embodiment of the present disclosure.

Referring to FIG. 18, the transmission and reception process of the AP is as follows:

An O_AP may transmit a beacon including information for other APs and/or a list of APs for which roaming is recommended to the STA. The O_AP receives an MLD roaming request frame from the STA, and can identify the ID of the AP to which the STA will roam through a link ID and/or an AP MLD ID. The O_AP can additionally identify a UHR AP MLD ID if the UHR AP MLD ID is included. The O_AP may transmit an MLD roaming response frame, which includes information for whether to accept the roaming and various IEs described in the present disclosure, to the STA.

Referring to FIG. 18, the transmission and reception process of the STA is as follows:

The STA can receive a beacon including information for other APs and/or a list of APs for which roaming is recommended from the O_ AP. The STA can determine an AP to roam to based on the information for the APs for which roaming is recommended received from the O_AP. The STA may transmit a roaming request frame, which includes information for the AP to roam to and various IEs described in the present disclosure, to the O_AP. The STA receives a roaming response frame from the O_AP, and if the roaming is accepted, the STA can perform roaming to an N_AP.

Hereinafter, a detailed implementation for the recommendation of roaming APs is described.

A non-AP MLD/STA may request information regarding APs that the non-AP MLD/STA intends to roam to (or, APs for which roaming recommendation is enabled) to an AP MLD/STA through an ML probe request frame for enabled APs (or, APs to which roaming is enabled) based on the MLD roaming enabled of the RNR IE received through a management frame. In response to the ML probe request frame, the AP MLD/STA can inform the non-AP MLD/STA through an ML probe response frame of information for whether the AP is suitable for roaming (or, a list of APs for which roaming is recommended). When transmitting the ML probe request frame for roaming to a corresponding AP, ML roaming enabled may be set to 1.

### (1) ML probe request frame format for AP recommendation

In the case of a probe request not related to roaming, an AP roaming recommendation enabled field (or, briefly, a roaming recommendation enabled field) may be added to the ML probe request frame to reduce overhead that may occur due to an AP unnecessarily providing an AP recommendation.

### 1) Case where the roaming recommendation enabled field is included in the Common Info field

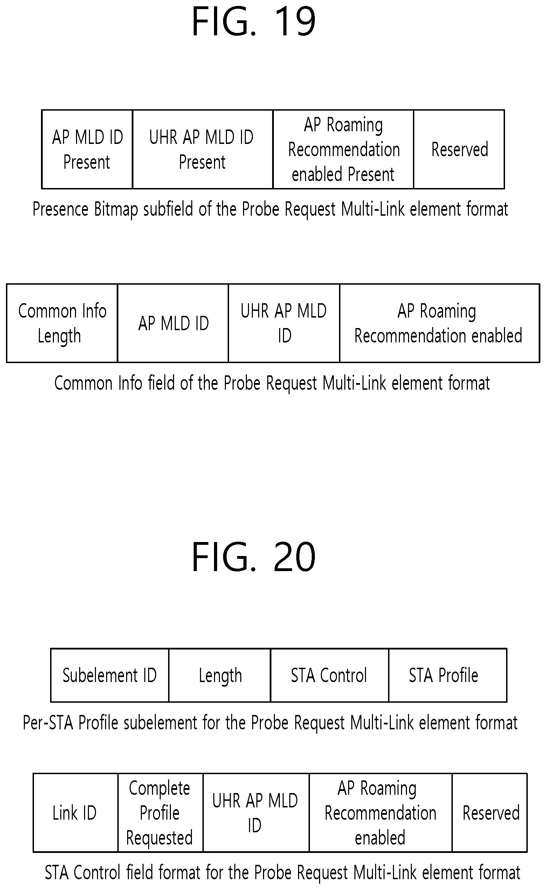

FIG. 19 shows an example of the structure of an ML probe request frame when the Common Info field includes a roaming recommendation enabled field according to an embodiment of the present disclosure.

Referring to FIG. 19, a presence bitmap subfield of a probe request ML IE may indicate whether the AP roaming recommendation enabled field is included in the Common Info field of the probe request ML IE. When the AP roaming recommendation enabled field is included in the Common Info field, information for all APs to which the probe request frame is transmitted may be requested for roaming. That is, if at least one AP is included in the ML probe request frame for another operation such as an association rather than roaming, the AP roaming recommendation enabled field is not added to the Common Info field.

### 2) Case where the roaming recommendation enabled field is included in the Link Info field

FIG. 20 shows an example of the structure of an ML probe request frame when the Link Info field includes a roaming recommendation enabled field according to an embodiment of the present disclosure.

Referring to FIG. 20, when the roaming recommendation enabled field is included in the Link Info field, information for APs can be individually requested for roaming. If at least one AP is included in the ML probe request frame to perform an operation such as an association rather than roaming, the AP roaming recommendation enabled field may be added to the Link Info field.

### (2) ML probe response frame format for AP recommendation

A non-AP MLD/STA may request information regarding APs that the non-AP MLD/STA intends to roam to (or, APs for which roaming recommendation is enabled) to an APMLD/STA through an ML probe request frame for APs that are enabled (or, APs to which roaming is enabled) based on the MLD roaming enabled. In response to the ML probe request frame, the AP MLD/STA can inform the non-APMLD/STA through an ML probe response frame of information for whether the AP is suitable for roaming (or, a list of APs for which roaming is recommended).

For example, the ML probe response frame may include a list of APs suitable for roaming (or, APs for which roaming is recommended) (e.g., Recommended AP list). The list of APs suitable for roaming (or, APs for which roaming is recommended) may include a list of link IDs related to the APs suitable for roaming (or, APs for which roaming is recommended).

### Frame Exchange for MLD Roaming

For MLD roaming to be triggered, frame exchange is required between the non-AP MLD (or STA) and the AP MLD. MGMT frames can be utilized, particularly the Action frame, a type of MGMT frame. Roaming-related frames can be referred to as follows:
- A frame for a STA to request MLD roaming from an AP is called an MLD Roaming Request frame.
- A frame for an AP to request MLD roaming from a STA is called an MLD Roaming Response frame.

### (1) MLD Roaming Request Frame Format

An MLD Roaming Request frame can include the information shown in <Table 1> below:

**[Table 1]**

| Order | Information |
|---|---|
| 1 | Category |
| 2 | UHR Action or Protected UHR Action |
| 3 | Dialog Token |
| 4 | Reconfiguration Multi-Link element |

Order 1: Basically, the category can be included in a new UHR Action or Protected UHR Action frame, but is not limited thereto. Order 4: The Reconfiguration Multi-Link IE defined in the existing 802.11be can be utilized for information required for an MLD roaming request.

In various embodiments, the Reconfiguration Multi-Link IE may include a UHR MLD MAC address (or a MAC address for a roaming group). For example, the UHR MLD MAC address (or a MAC address for a roaming group) may be included in the Common Information field of the Reconfiguration Multi-Link IE. In another example, the UHR MLD MAC address (or a MAC address for a roaming group) may be included in the Link Information field of the Reconfiguration Multi-Link IE.

The Common Information field and Link Information field of the Reconfiguration Multi-Link IE are as follows:

### 1) Common Information Field

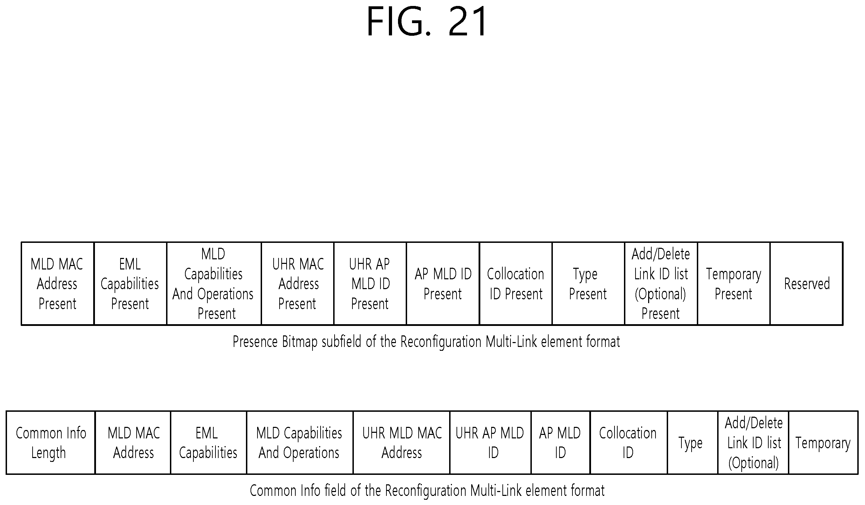

FIG. 21 shows an example of the Common Information field of the Reconfiguration Multi-Link IE according to an embodiment of the present disclosure.

When transitioning to a new AP, if STAs, particularly one or more STAs in terms of non-AP MLD simultaneously perform MLD roaming, MLD capabilities and operations, or EML capabilities may change. Therefore, this information can be additionally included in the common information field. As before, the presence of subfields in the common information field can be determined from the presence bitmap.

Referring to FIG. 21, the UHR MLD MAC address (or the MAC address for the roaming group) can be included in the common information field of the reconfiguration ML IE. The present bitmap subfield of the reconfiguration ML IE can further include a subfield (e.g., UHR MAC address present) indicating whether the MAC address for the roaming group is included in the common information field of the reconfiguration ML IE.

### 2) Link Information Field

When more than one STA simultaneously performs MLD roaming, one or more per-STA profile subelements may be required.

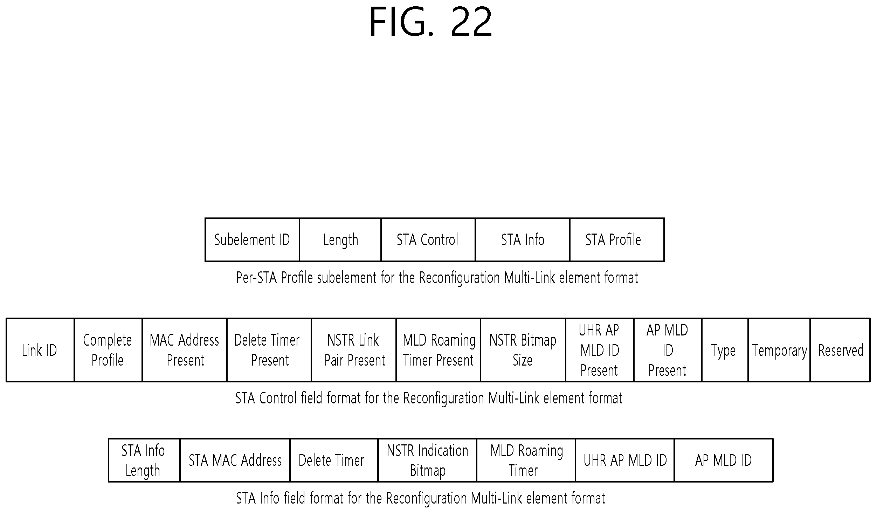

FIG. 22 shows an example of the link information field of the reconfiguration multi-link IE according to an embodiment of the present disclosure.

Referring to FIG. 22, the UHR MLD MAC address (or the MAC address for the roaming group) can be included in the Per-STA profile subelement of the Link Information field of the Reconfiguration ML IE.

Basically, when moving to a different AP, information regarding whether each link is simultaneous transmission and receive (STR) or non-STR (NSTR) may change from a non-AP MLD perspective. Therefore, the STA information field may include an NSTR indication bitmap. Similarly, the presence or absence of subfields in STA information field can be determined by the Present subfield of the STA control field.

The Link ID may indicate the Link ID corresponding to the N_AP.

The Complete profile represents the STA's Complete information, i.e., all information included when transmitting an association request frame. However, since this is a case where an existing STA, not a new STA, is moving, the capabilities or operating parameters of the STA may not change. Since the AP MLD is already aware of this, it can be used as an indication containing only the changed information instead of the Complete profile. For example, in the case of the Complete profile = 0 which is a Partial profile, only the information (i.e., fields/IEs) that will change when moving to the N_AP are included in the STA profile. Alternatively, if the Complete profile is referred to as a Changed profile and this value is 1, the STA profile only includes the information (i.e., fields/IEs) that will change when moving to the N_AP.

The MLD roaming timer indicates the time when MLD roaming is completed and no longer operates with the O_AP, but operates with the N_AP. In other words, it can indicate the remaining time until the expected time to switch to the AP to which it will roam. This is related to the TIM field described below. If the MLD roaming timer is applied commonly to all APs, it can be included in the common information field, unlike in FIG. 22. In this case, the presence or absence of the MLD roaming timer in the common information field can be indicated through the Presence bitmap. Since this is information transmitted by the STA, it can be interpreted as a reference by the AP MLD.

In addition to the above information, the UHR AP MLD ID (or Group ID), AP MLD ID, Collocation ID and/or UHR MLD MAC address (or MAC address for roaming group) may be included in the Reconfiguration Multi-Link IE as follows. The AP MLD ID is the ID of the AP MLD to which the APs to which the non-AP MLD (or STA) will roam belong, and the UHR AP MLD ID (or Group ID) is the ID of the UHR AP MLD (or roaming group) to which the AP MLDs to which the non-AP MLD (or STA) will roam belong. In a situation where the AP MLD has previously identified the UHR AP MLD ID (or Group ID) through a beacon or probe request/response process and sends roaming requests to only APs/AP MLDs affiliated with the same UHR AP MLD (or belonging to the same roaming group), the UHR AP MLD ID (or Group ID) field may not be present in the Reconfiguration Multi-Link IE. Such cases are described in more detail below. That is, the format is described depending on whether the UHR AP MLD ID (or group ID), AP MLD ID, Collocation ID, and/or UHR MLD MAC address (or MAC address for a roaming group) is always included in the Reconfiguration Multi-Link IE.

### Case 1-1) Included in the Common Information Field

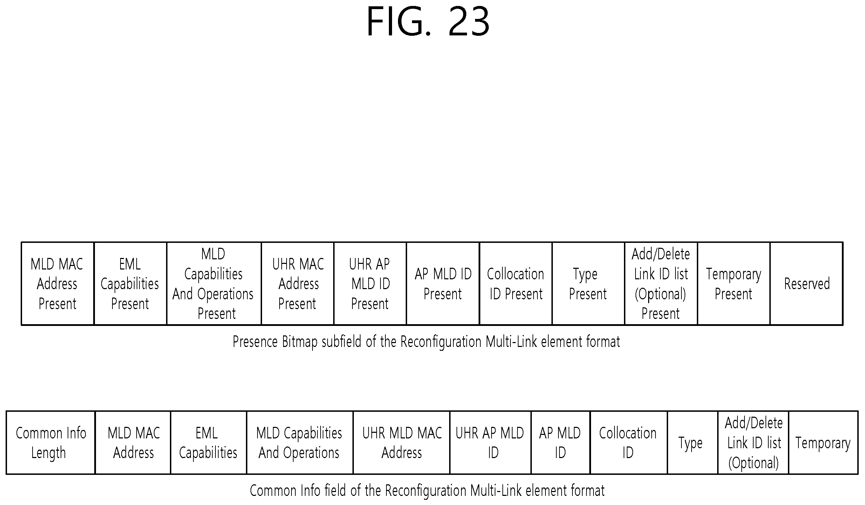

FIG. 23 shows an example in which the UHR MLD MAC address, UHR AP MLD ID, and AP MLD ID are included in the common information field of the Reconfiguration Multi-Link IE according to an embodiment of the present disclosure.

The Presence bitmap may indicate whether at least one of the UHR MLD MAC address (or MAC address for a roaming group), UHRAP MLD ID, AP MLD ID, or Collocation ID is included. If included only in the Common Information Field, roaming requests can only be made to APs with the same UHR AP MLD ID (or group ID), AP MLD ID, Collocation ID, and/or UHR MLD MAC address (or MAC address for a roaming group). That is, even within the same UHR AP MLD (or roaming group), requests cannot be made for multiple AP MLD IDs, multiple collocation IDs, and multiple UHR MLD MAC addresses (or MAC addresses for roaming groups). For example, one or more STAs may not be able to request reconfiguration to an AP belonging to a different AP MLD than the AP of the AP MLD. However, in the case where roaming to the same AP MLD is common, overhead can be reduced compared to including each address in the link information field as shown below.

Referring to FIG. 23, the UHR MLD MAC address (or the MAC address for the roaming group) can be included in the common information field of the reconfiguration ML IE. The present bitmap subfield of the reconfiguration ML IE can further include a subfield (e.g., UHR MAC address present) that indicates whether the MAC address for the roaming group is included in the common information field of the reconfiguration ML IE.

### Case 1-2) Included in the Common Information Field

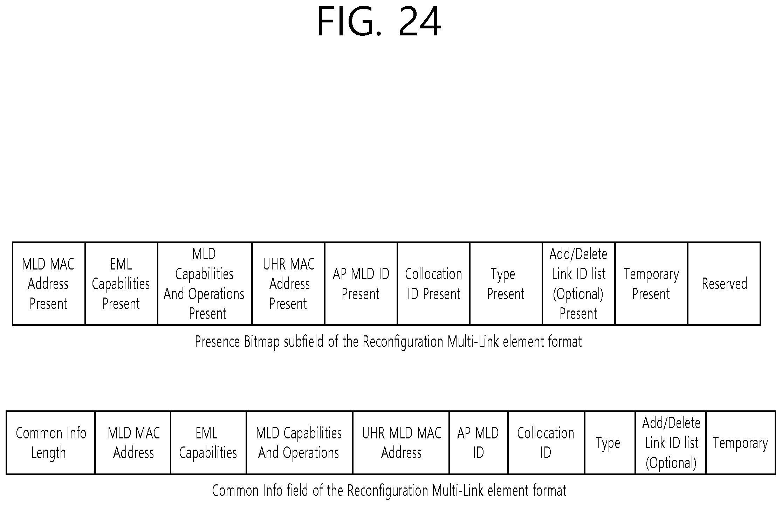

FIG. 24 shows an example in which the UHR MLD MAC address and AP MLD ID are included in the common information field of the Reconfiguration Multi-Link ID according to an embodiment of the present disclosure.

If the STA and AP confirm and recognize that the UHR AP MLD (or roaming group) with which the N_AP and O_AP are affiliated are the same through the previous association process, there is no need to transmit the UHR AP MLD ID (or group ID). Therefore, overhead can be reduced without separately adding the UHR AP MLD ID (or group ID) field, as shown in FIG. 24. The method of including the fields is the same as in Case 1-1, except for whether the UHR AP MLD ID (or group ID) field is included.

Referring to FIG. 24, the UHR MLD MAC address (or the MAC address for the roaming group) may be included in the common information field of the reconfiguration ML IE. The present bitmap subfield of the reconfiguration ML IE may further include a subfield (e.g., "UHR MAC address present") indicating whether the MAC address for the roaming group is included in the common information field of the reconfiguration ML IE.

### Case 2-1) Included in the Link Information Field - Always Present

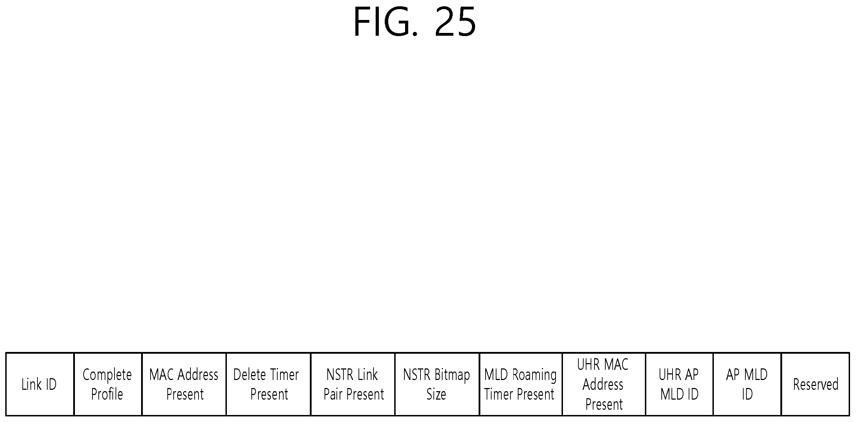

FIG. 25 shows an example in which the link information field of the Reconfiguration Multi-Link IE includes the UHR MLD MAC address, the UHR AP MLD ID, and the AP MLD ID according to an embodiment of the present disclosure.

The link information field may include multiple Per-STA profile subelements, each of which may indicate a roaming request for an AP via a link ID. The AP MLD ID and the UHR AP MLD ID (or group ID) in the STA control field of the Per-STA profile subelement may be used to identify the AP to which the STA intends to roam. This allows roaming requests for multiple APs corresponding to multiple AP MLD IDs, but when requesting for the same AP MLD ID, the overhead is greater than specifying it in the common information field.

Referring to FIG. 25, the UHR MLD MAC address (or the MAC address for the roaming group) may be included in the STA control field of the Per-STA profile subelement.

### Case 2-2) Included in the Link Information Field - Always Present

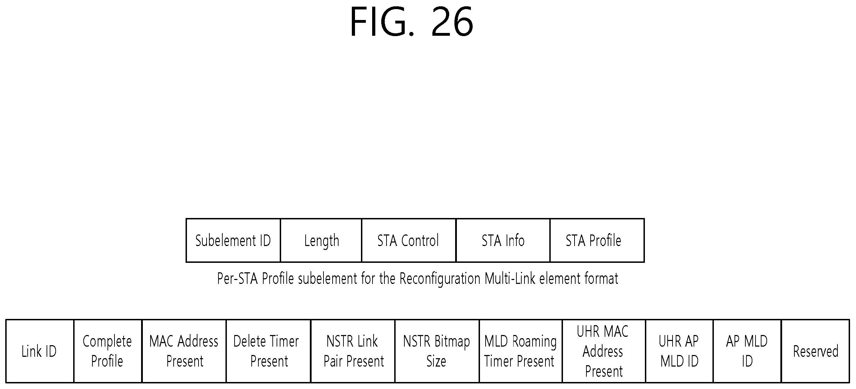

FIG. 26 shows an example in which the AP MLD ID is included in the Link Information field of the Reconfiguration Multi-Link IE according to an embodiment of the present disclosure.

If the STA and AP confirm and recognize that the UHR AP MLD (or roaming group) with which the N_AP and O_AP are affiliated are the same through a previous association process, there is no need to transmit the UHR AP MLD ID (or group ID). Therefore, overhead can be reduced without separately adding the UHR AP MLD ID (or group ID) field, as shown in FIG. 26.

Additionally, the link information field of the Reconfiguration Multi-Link IE may include a UHR MAC address (or a MAC address for a roaming group) present field. The UHR MAC address (or a MAC address for a roaming group) present field may indicate whether the UHR MAC address (or a MAC address for a roaming group) is included.

Referring to FIG. 26, the UHR MLD MAC address (or a MAC address for a roaming group) may be included in the STA Control field of the Per-STA profile subelement.

### Case 3-1) Included in the Link Information Field - Not Always Present

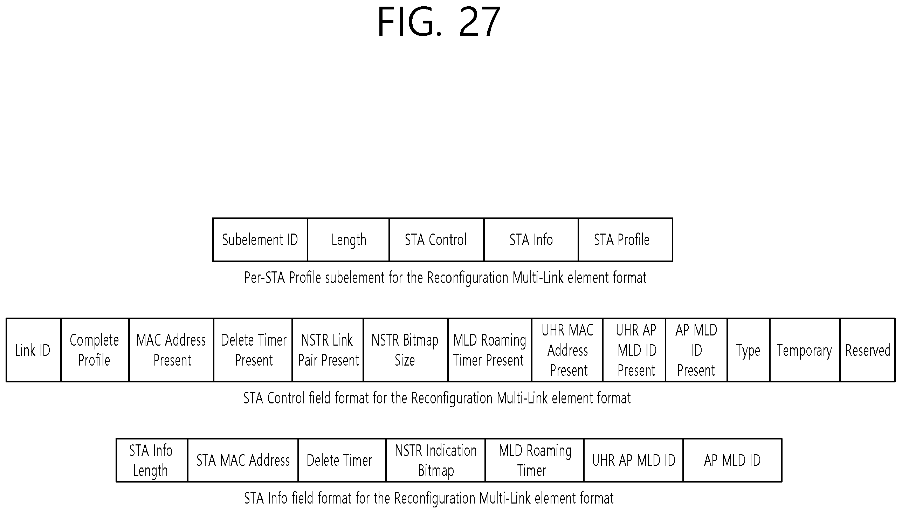

FIG. 27 shows another example in which the UHR AP MLD ID and AP MLD ID are included in the link information field of the Reconfiguration Multi-Link IE according to an embodiment of the present disclosure.

The UHR AP MLD ID (or group ID) Present and AP MLD ID Present fields of the STA Control field of the Per-STA profile subelement may indicate whether the UHRAP MLD ID (or group ID) and AP MLD ID for the AP corresponding to the link ID are included. The UHR AP MLD ID and AP MLD ID can be included in the STA information field or the STA profile field. Similarly, this can request information for multiple APs corresponding to multiple AP MLD IDs. Specifically, when combined with the indication method in the common information field described above, when requesting roaming for APs corresponding to the same AP MLD ID, overhead can be reduced compared to the indication method in the link information field by not including the UHR AP MLD ID (or group ID) and AP MLD ID.

Alternatively, if the UHRAP MLD ID (or group ID) and AP MLD ID are indicated in the common information, this may implicitly specify that the roaming request is for APs corresponding to the same UHR AP MLD ID (or group ID) and AP MLD ID, and thus may not include the UHR AP MLD ID (or group ID) and AP MLD ID. In other words, the UHR AP MLD ID (or group ID) Present field and the AP MLD ID Present field may not be included.

Referring to FIG. 27, the UHR MLD MAC address (or the MAC address for the roaming group) may be included in the STA Information field of the Per-STA profile subelement. The STA Control field of the Per-STA profile subelement may further include a subfield (e.g., "UHR MAC Address Present") indicating whether the MAC address for the roaming group is included in the STA Information field.

### Case 3-2) Included in the Link Information Field - Not Always Present

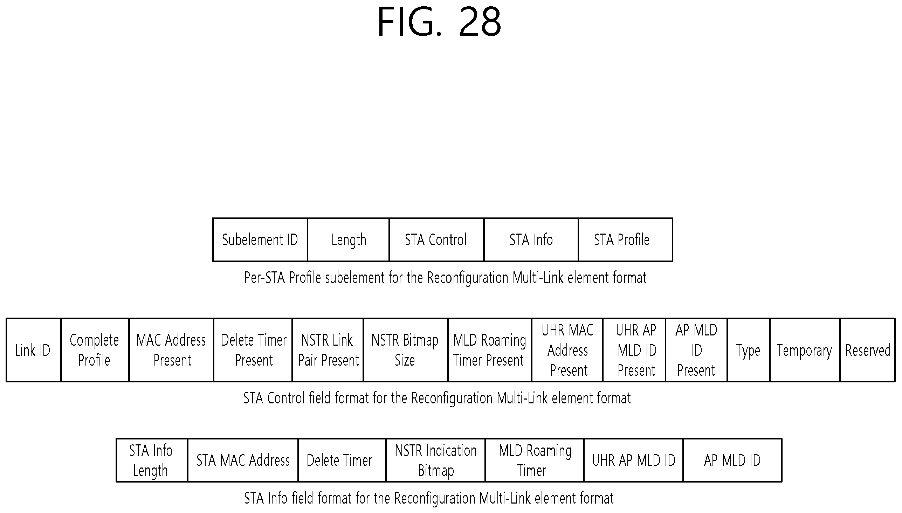

FIG. 28 shows another example in which the AP MLD ID is included in the Link Information field of the Reconfiguration Multi-Link IE according to an embodiment of the present disclosure.

If the STA and AP confirm and recognize that the UHR AP MLD (or roaming group) with which the N_AP and O_AP are affiliated is the same through the previous association process, there is no need to transmit the UHR AP MLD ID. This reduces overhead without separately adding a UHRAP MLD ID (or group ID) field, as shown in FIG. 28.

Referring to FIG. 28, the UHR MLD MAC address (or the MAC address for the roaming group) can be included in the STA Information field of the Per-STA profile subelement. The STA Control field of the Per-STA profile subelement may further include a subfield (e.g., "UHR MAC Address Present") indicating whether the MAC address for the roaming group is included in the STA Information field.

Further, since the present disclosure includes a function of temporarily adding and deleting links for MLD roaming, a method for indicating these is required, and the following methods may be used.

Basically, two or more bits can be used to indicate the (link) type, which can be Type 0: Addition/Type 1: Deletion/Type 2: Temporary Addition/Type 3: Temporary Deletion. Temporary Deletion can also be replaced with Type 1. Addition means a STA in a non-AP MLD requests an additional link connection with an AP in an AP MLD. Deletion means releasing (removing) a currently connected link. Temporary Addition means a STA in a non-AP MLD requests an additional connection with an AP other than the currently associated AP, allowing it to establish multiple links.

A separate field can be configured in the Type field to indicate "temporary." For example, the Type field can indicate a link addition/change, and a "temporary" field can be configured to indicate a temporary link. Temporary addition can be configured using the values of both fields (e.g., the first field = Addition, the second field = 1 (temporary)).

When requesting both deletion and addition during MLD roaming, the (Link) Type in the Common Information field can be set to 4 or 5. Type 4 indicates add then delete, while Type 5 indicates delete then add. Type 4 allows links to be added first, then deleted. Conversely, Type 5 allows links to be deleted first, then added.

Type 6 can indicate a link switch. Unlike addition or deletion, a link switch refers to switching from one link to another link in a single operation.

The Add/Delete Link ID list field is optional and can be included when the Type field is set to 4 or 5. The link IDs in this Add/Delete Link ID list can include the link IDs of links requesting both addition and deletion. For link information (fields) with link IDs included in the Add/Delete Link ID list, if the Type field indicates Add, it indicates that the link is being added among links that can be added and deleted simultaneously. If the Type field indicates Delete, it indicates that the link is being deleted.

If the Type value of the Common Information field is 6, the Add/Delete Link ID list may not exist.

The Type field in the Link Information field requires a value for both simultaneous addition and deletion requests, in addition to the value required for simple addition or deletion. The Type field can be configured as follows, but the values and settings for the Type field are not limited to these values:
- Type 0: Add
- Type 1: Delete
- Type 2: Temporary Add
- Type 3: Temporary Delete
- Type 4: Add and Delete (Add)
- Type 5: Add and Delete (Delete)
- Type 6: Delete and Add (Add)
- Type 7: Delete and Add (Delete)
- Type 8: Link Transition

Type 4 is for adding links in a link add-then-delete operation, while Type 5 is for deleting links.

Type 6 is for adding links in a link delete-then-add operation, while Type 7 is for deleting links.

The Type field and Temporary field may be included as follows, and at least one or more additional fields may be included:

In some implementations, the Type field and/or Temporary field may be included in the MLD Roaming Request frame body or the Common Information field of the Reconfiguration IE.

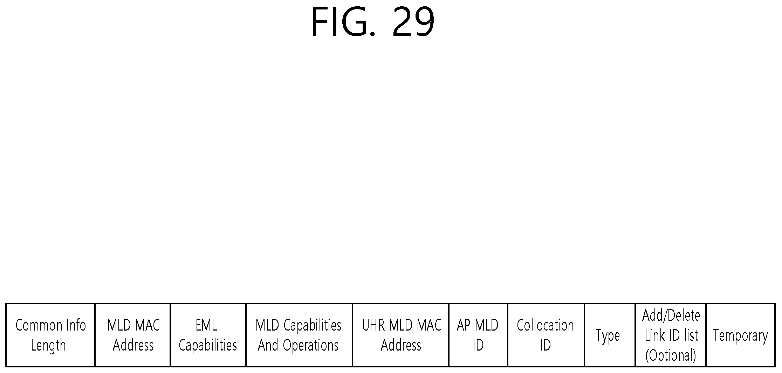

FIG. 29 shows an example in which the Temporary field is included in the Common Information field of the Reconfiguration ML IE according to an embodiment of the present disclosure.

In this case, only one operation may be indicated for all APs. That is, if an addition is indicated, a link addition request may only be made for the APs indicated by the Link Information field.

In some implementations, the Type field and/or Temporary field may be included in the MLD Roaming Request frame body or the Link Information field of the Reconfiguration IE.

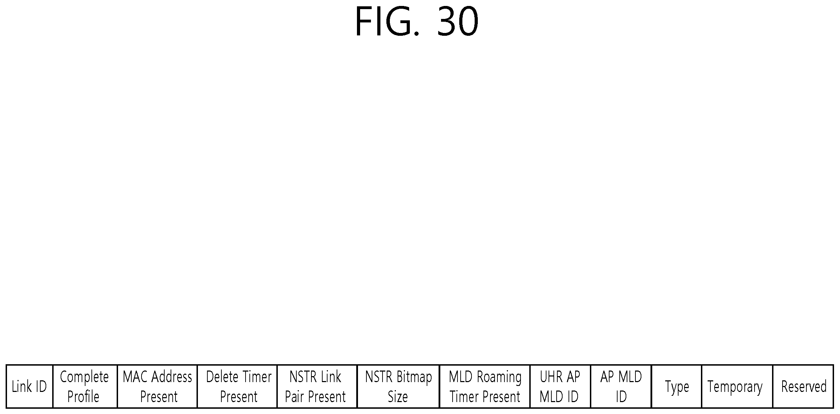

FIG. 30 shows an example in which the Temporary field is included in the Link Information field of the Reconfiguration ML IE according to an embodiment of the present disclosure.

In this case, different operations may be requested for each AP. For example, a temporary addition may be requested for one AP, and a deletion may be requested for another AP.

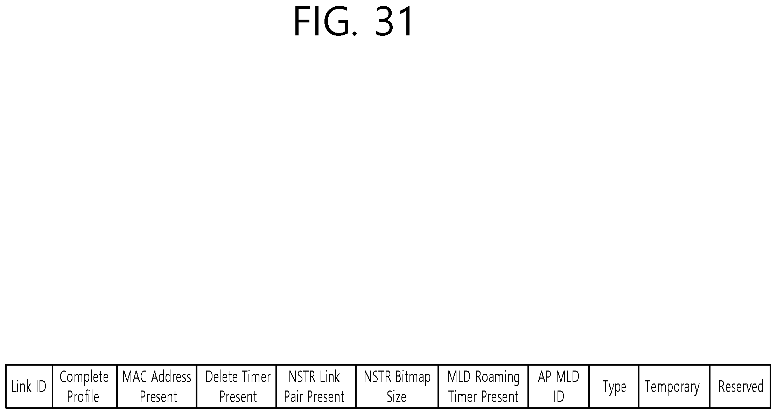

FIG. 31 shows another example in which a temporary field is included in the link information field of a reconfiguration ML IE according to an embodiment of the present disclosure.

Referring to FIG. 31, for a link information field where the UHR AP MLD ID (or group ID) field is omitted, a type field is included in the link information field.

In some implementations, link addition and deletion may be requested simultaneously. For example, a new link may be added first, and an existing link may be deleted. In this case, the request method is as follows:
- If the common information field includes both a type field and an add/delete link ID list field
   the type of the common information field is set to 4, and the link ID of the newly added link and the link ID of the deleted link are added to the add/delete link ID list. The link ID of the added link may be listed before the link ID of the deleted link in the list in order. For example, if the link ID of the added link is 5 and the link ID of the deleted link is 2, the add/delete link ID list may be set to 5, 2, etc. By specifying the order in this way, the common information field can indicate which links are to be added and which are to be deleted. However, this can also be indicated through the type field in the link information field, so setting the order may not be necessary.

Since the link type field in the link information field can already indicate, via the common information field, whether the frame requests addition or deletion individually or simultaneously, using only type 0 and type 1 is sufficient to indicate whether a link is being added or deleted. Alternatively, if link IDs are ordered in the add/delete link ID list of the common information, the type field can be omitted from the link information field to reduce overhead.
- When the common information field only includes the type field
   the type field in the common information field can be set to 4, and types 0 and 1 in the link information field can be used to indicate whether a link is being added or deleted.
- When the common information field does not include either the type field or the add/delete link ID list field

In this case, the link type field in the link information field can use a value of 4 or 5 to request addition and deletion. At this time, the link being added will be set to type 4, and type 5 can be set for the link being deleted. The link set to type 4 is added first, and then the link set to type 5 is deleted.

In some implementations, when link addition and deletion are requested simultaneously, existing links can be deleted first and new links added. In this case, the request method is as follows:
- If the common information field includes both a type field and an add/delete link ID list field

Set the type of the common information field to 5, and add the link IDs of the newly added link and the link IDs of the deleted link to the add/delete link ID list. The link ID of the deleted link can be listed before the link ID of the added link. For example, if the link ID of the link to be deleted is 5 and the link ID of the link to be added is 2, the add/delete link ID list may be set as 5, 2. This ordering allows the common information field to indicate which links are being added and which are being deleted. However, since this can also be indicated through the type field of the link information field, the ordering may not be necessary.
- If the common information field contains only the Type field
   the Type of the Common Information field can be set to 5, and the Link Information field can be used to indicate whether a link is being added or deleted using Types 0 and 1.
- If the Common Information field does not contain either the Type field or the Add/Delete Link ID List field
   in this case, the Type field in the Link Information field can be set to 6 or 7 to request add-then-delete. In this case, the link being added will be set to Type 6, and the link being deleted will be set to Type 7. The link set to Type 6 is added first, and then the link set to Type 7 is deleted.

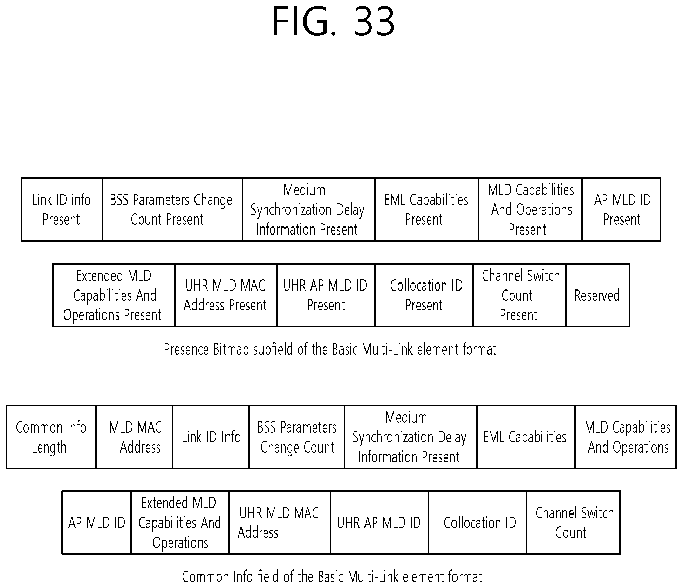

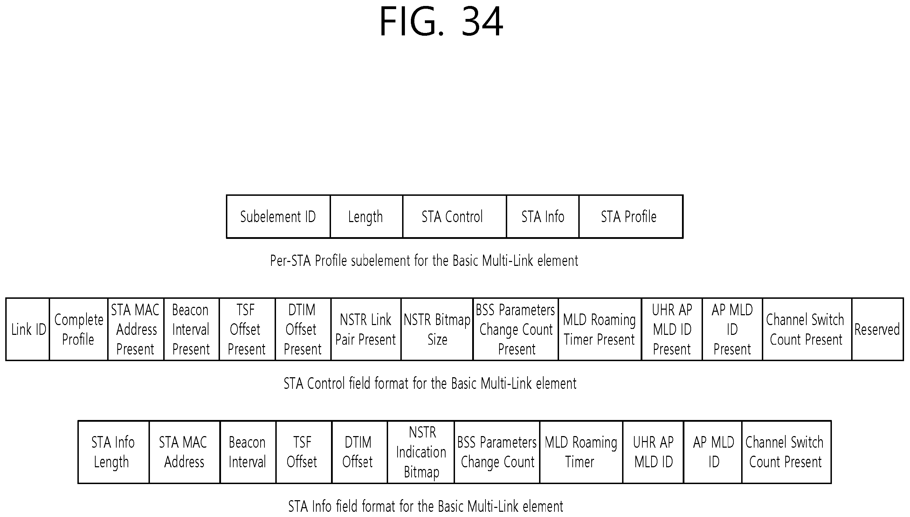

In some implementations, the Type field can be used to indicate a link switch. Instead of indicating a link add/delete, if a link switch is indicated using Type 6 in the Common Information field, the link in which the MLD Roaming Request frame is transmitted can be switched to the link corresponding to the Link ID in the Link Information field. In the case of a link switch, the Type field can be omitted from the Link Information field to reduce overhead. When performing a link switch, the AP and STA should know by when the link switch should be completed. This may be determined by the AP and informed to the STA, or it may be determined by the STA and informed to the AP. In the case where the AP informs the STA, it can be informed in the MLD roaming response frame by adding a Channel Switch Count field, as in FIG. 33 or FIG. 34. In the case where the STA determines and informs the AP, it can be informed through the MLD roaming request frame using the Delete Timer field in the Reconfiguration ML IE.

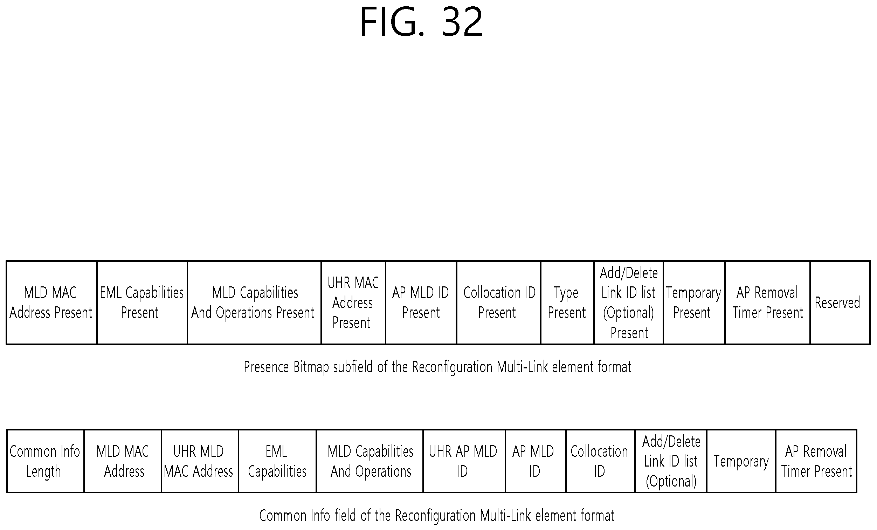

FIG. 32 shows an example where the AP removal timer is included in the Common Info field of the Reconfiguration ML IE.

Referring to FIG. 32, in the case where the completion time of a link switch is informed using the Delete Timer field of the Reconfiguration ML IE, if all links for which the link switch is requested through the Multi-link Device (MLD) roaming request frame have the same delete timer value, the AP removal timer (or, delete timer) field may be added to the Common Info field instead of the Link Info field to reduce overhead. At this time, the AP removal timer (or, delete timer) field may not be used based on the AP removal timer present (or, delete timer present) field included in the Link Info field or the present bitmap subfield of the Reconfiguration ML IE.

If the delete timer values of the links for which the link switch is requested are different from each other, the AP removal timer (or, delete timer) field may be added to the Link Info field instead of the Common Info field. If there is only one link to perform the link switch, the AP removal timer (or, delete timer) field may be added to the Common Info field, or the AP removal timer (or, delete timer) field may be added to the User Info field/Link Info field.

### (2) MLD Roaming Response Frame Format

The MLD Roaming Response frame must consider the link-level parameters that must be provided, as it must change links while maintaining multi-link setup.

**[Table 2]**

| Order | Information |
|---|---|
| 1 | Category |
| 2 | UHR Action or Protected UHR Action |
| 3 | Dialog Token |
| 4 | Status Code |
| 5 | Basic Multi-Link element |
| 6 | Group key Information |
| 7 | AID |
| 8 | Channel switching Announcement element (optional) |
| 9 | Extended Channel switching Announcement element (optional) |
| 10 | TID-to-link mapping element (optional) |

Order 1: Basically, the category can be included in a new UHRAction or Protected UHRAction, but is not limited thereto. Order 4: The status code can utilize the existing status code field.
- When responding to an MLD roaming request, the basic multi-link IE defined in the existing 802.11be can be utilized for the necessary information about the AP MLD and N_AP.

Order 5: The modified basic multi-link element IE is as follows:

### 1) Common Information Field

FIG. 33 shows an example of the Common Info field structure of the Basic ML IE.

Referring to FIG. 33, the common information corresponds to the N_APs to which one or more STAs are performing MLD roaming. The UHR MLD MAC address (or the MAC address for the roaming group) can be included in the common information field of the basic ML IE.

When transmitting a Beacon or ML Probe Response frame, if the Basic ML IE is included, the Channel Switch Count field may be excluded by using the Channel Switch Count Present field.

In the Reconfiguration ML IE of the MLD roaming request frame, if the Type field of the Common Info field is set to Type 6, or the Type field of the User Info field/Link Info field is set to Type 8, the Common Info field of the Basic ML IE may include the Channel Switch Count field. When the Common Info field includes the Channel Switch Count field, if one or more link(s) for which link switch is simultaneously requested through a single MLD roaming request have the same time to complete the switch to the new link(s), the Channel Switch Count field of the Common Info field can be used to inform the AP/STA by when the link switch should be performed. The Link Switch Count/Channel Switch Count indicates the number of TBTTs to be received from the AP associated with the existing link before the link switches to the new link. Through the Channel Switch Count field, the AP can inform the STA by when the link switch to the new link should be performed.

### 2) Link Information Field

If more than one STA is performing MLD roaming simultaneously, one or more per-STA profile subelements may be required for the corresponding APs.

The Link Info field, which reflects the information being changed regarding the STA Control field, STA Info field, and STA Profile field of the existing Basic Multi-link IE, is exemplified in FIG. 34.

FIG. 34 shows an example of the Link Info field structure of the Basic ML IE.

Referring to FIG. 34:
- The UHR MLD MAC address (or the MAC address for the roaming group) may be included in the Link Information field of the Basic ML IE. For example, the UHR MLD MAC address (or the MAC address for the roaming group) may be included in the STA Control field of the Link Information field. Alternatively, the UHR MLD MAC address (or the MAC address for the roaming group) may be included in the STA Information field of the Link Information field. In this case, the STA Control field may further include a subfield (e.g., "UHR MAC Address Present") indicating whether the UHR MLD MAC address (or the MAC address for the roaming group) is included in the STA Information field.
- The Link ID indicates the Link ID corresponding to the N_AP.
- The Complete Profile indicates all information included when transmitting Complete information of the AP, i.e., an Association Response frame, as before. However, since the AP performs MLD roaming, its capabilities or operating parameters may not change. Therefore, in this case, the Complete profile is set to 0.
- Additionally, information about the MLD roaming timer is included. For this purpose, the STA Control field includes an MLD Roaming Timer Present field, and the STA Information field includes an MLD Roaming Timer field. This indicates the time when MLD roaming is completed, no longer operating with the O_AP, and operating with the N_AP. This can utilize the MLD roaming timer information transmitted by the STA, but may not be included if the STA transmitted it and the status code of the response is SUCCESS.

When the Basic ML IE is included in the Association Request/Response frame, because roaming-related information is not required, the Basic ML IE can be configured without adding the UHR MLD MAC address (or, MAC address for the roaming group), UHR AP MLD ID (or, group ID), Collocation ID, Channel Switch Count, UHR roaming timer shown in FIG. 33, and the MLD roaming timer, UHRAP MLD ID (or, group ID), AP MLD ID, and/or Channel Switch Count fields shown in FIG. 34 by using the Presence field.

If the time by which each link must complete the link switch is different from each other, a Channel Switch Count field can be added to the Link Info field to inform by when the link switch should be completed for each link individually. If a link switch is requested for only one link through an MLD roaming request, the Channel Switch Count field may be included in the Common Info field or may be included in the Link Info field.
- In addition to the above information, the UHR AP MLD ID (or group ID) and AP MLD ID may be included as follows. The AP MLD ID is the ID of the AP MLD to which the APs to which a non-AP MLD (or STA) will roam belong, and the UHR AP MLD ID (or group ID) is the ID of the UHR AP MLD (or roaming group) to which the AP MLDs containing the APs to which the non-AP MLD (or STA) will roam belong. If the MLD roaming request frame does not include the UHR AP MLD ID (or group ID), it indicates that it is affiliated with/included in the same UHR AP MLD (or roaming group), and thus the UHR AP MLD ID (or group ID) field may not be included. The specific cases for this are as follows:

### Case 1-1) Included in the Common Information Field

This can be utilized when the Reconfiguration Multi-Link (ML) IE described above is requested in a manner corresponding to Case 1-1).

Similarly, the presence bitmap indicates whether the UHR AP MLD ID (or group ID) and AP MLD ID are included, and accordingly, the UHR AP MLD ID (or group ID) and AP MLD ID are included in the common information field. This can only provide information on APs in the AP MLD where the UHR AP MLD ID (or group ID) = 0 and the Collocation ID≠0.

### Cases 1-2) Included in the common information field

This can be utilized when the reconfiguration ML IE described above is requested in a manner corresponding to Cases 1-2).

Similarly, the presence bitmap indicates whether the AP MLD ID is included, and accordingly, the AP MLD ID is included in the common information field.

### Case 2-1) Included in the Link Information Field - Always Present

This can be utilized when the Reconfiguration ML IE described above is requested in the manner corresponding to Case 2-1).

The UHR AP MLD ID (or Group ID) and AP MLD ID for the AP corresponding to the Link ID of each Per-STA Profile subelement are included in the STA Control field. This can provide information for multiple APs corresponding to multiple AP MLD IDs, but providing information for the same AP MLD ID requires greater overhead than indicating it in the common information field.

### Case 2-2) Included in the Link Information Field - Always Present

This can be utilized when the Reconfiguration ML IE described above is requested in the manner corresponding to Case 2-2.

The AP MLD ID for the AP corresponding to the Link ID of each Per-STA Profile subelement is included in the STA Control field. This can provide information about multiple APs corresponding to multiple AP MLD IDs, but providing information for the same AP MLD ID incurs greater overhead than specifying it in the common information field.

### Case 3-1) Included in the Link Information Field - Not Always Present

This can be utilized when the Reconfiguration ML IE described above is requested in the manner corresponding to Case 3-1).

The UHR AP MLD ID (or Group ID) Present and AP MLD ID Present fields in the STA Control field of the Per-STA Profile subelement can indicate whether the AP MLD ID for the AP corresponding to the Link ID is included. The UHR AP MLD ID (or Group ID) and AP MLD ID can be included in the STA Information field or the STA Profile field. Similarly, this can provide information about multiple APs corresponding to multiple AP MLD IDs. In particular, when combined with the indication method in the common information field, if only information about APs corresponding to the same AP MLD ID is provided, overhead can be reduced compared to including the UHR AP MLD ID (or group ID) and AP MLD ID in the link information field by not including them.

Meanwhile, in the case of Unique ID Configuration within the Collocation Set in AP MLD related to the AP MLD ID configuration described above, if the collocation ID is 0, the UHR AP MLD ID (or group ID), AP MLD ID, and Collocation ID may be omitted. That is, if the collocation ID does not exist, the AP receiving the request can implicitly identify that the request is for information from other APs in its own AP MLD.

Meanwhile, if the Collocation ID is indicated in the common information field, it can be implicitly recognized that the information pertains to APs belonging to the same Collocation set, and thus the UHR AP MLD ID (or group ID), AP MLD ID, and Collocation ID may not need to be included. In other words, the UHR AP MLD ID (or group ID) Present and AP MLD ID Present fields may not be included.

### Case 3-2) Included in the Link Information Field - Not Always Present

This can be utilized when the Reconfiguration ML IE described above is requested in the manner corresponding to Case 3-2).

The AP MLD ID Present field of the STA Control field of the Per-STA Profile subelement can indicate whether to include an AP MLD ID for the AP corresponding to the Link ID. The AP MLD ID can be included in the STA Information field or the STA Profile field. Similarly, this can provide information about multiple APs corresponding to multiple AP MLD IDs. In particular, when combined with the indication method in the Common Information field, if only information about APs corresponding to the same AP MLD ID is provided, overhead can be reduced by not including the AP MLD ID compared to including it in the Link Information field.

Meanwhile, in the case of Unique ID Configuration within the Collocation Set in AP MLD related to the AP MLD ID configuration described above, if the collocation ID is 0, the AP MLD ID and collocation ID may be omitted. That is, if a Collocation ID does not exist, the AP receiving the request can implicitly recognize that it is the request for information from other APs regarding its own AP MLD.

Alternatively, if a Collocation ID is indicated in the Common Information field, it may be implicitly recognized that this is information from APs belonging to the same collocation set, and thus the AP MLD ID or Collocation ID may not be included. In other words, the UHR AP MLD ID (or Group ID) Present and AP MLD ID Present fields may not be included.

Order 6: Group Key Information. Since group keys are inherently different for each link, group key information for N_APs needs to be provided.

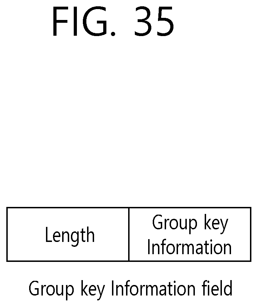

FIG. 35 shows an example of the Group Key Information field.

Referring to FIG. 35, the Length field indicates the length of the group key information. The group key information for each N_AP includes the MLO GTK KDE format, MLO IGTK KDE, and MLO BIGTK KDE, which each contain the link ID of the N AP as defined in 802.11be.

Order 7: Since the entire association identifier (AID) space is limited, each AP MLD can manage AIDs. That is, AIDs can be assigned when roaming to other AP MLDs. However, AIDs may not be included in the following cases:
- When roaming to another AP MLD and assigning the same AID
- When the entire AID space is managed by the UHR AP MLD (or roaming group) as before

Orders 8 and 9: If included, the channels of each AP to be roamed to are the same, but different from the channels of the previously associated APs. However, orders 8 and 9 may or may not be included in the following cases:
- If all APs enabling MLD roaming are assumed to be on the same channel, these IEs are not included.
- The channel of an AP to be roamed to may or may not be the same as the channel of the previously associated AP. In this case, the Channel Switching Announce IE or the Extended Channel Switching Announce IE can be included in the link information of the basic multi-link IE in Order 5. This is to perform channel switching for each roaming AP.

Order 10: This can be used to map TIDs in advance for newly connected links through TID-to-link mapping. If separate TID-to-link mapping is not performed, the default mapping can be applied.

Furthermore, an MLD roaming timer can be added to both the MLD roaming request and response frames.

Additionally, the AP MLD can include the MLD roaming timer in the above-mentioned Reconfiguration ML IE. This can also indicate a specific MLD roaming timer, as the AP MLD can control current roaming. For example, if the STA does not include an MLD roaming timer or it is inappropriate, the AP MLD can set and notify the STA. Furthermore, if the STA does not transmit an MLD roaming timer, the AP MLD can set and notify the STA. The MLD roaming timer has the same meaning. That is, it indicates the time when MLD roaming is completed, no longer operating with the O_AP, and operating with the N_AP.

If a temporary add request is received, after the MLD roaming timer expires, the STA completely releases the connection with the O_AP (i.e., Temporary Delete or Delete) and allows association with the N_AP.

If the MLD roaming timer is applied to all APs, it can be included in the common information field. The presence bitmap can indicate whether the MLD roaming timer is present in the common information field.
- Additionally, information about the MLD roaming timer can be included in the MLD roaming response frame. For this, the STA control field includes an MLD roaming timer present field, and the STA information field includes an MLD roaming timer field. This can indicate the remaining time until the STA can receive data from the AP to which it is roaming. This can also utilize the MLD roaming timer information transmitted by the STA. This is basically related to the TIM field described above.

If the MLD roaming timer is applied to all APs, it can be included in the common information field. The presence in the common information field can be indicated via the Presence bitmap. Alternatively, it can be included in the body of the MLD roaming probe request frame.

The operations of the AP and STA performing MLD roaming are as follows.

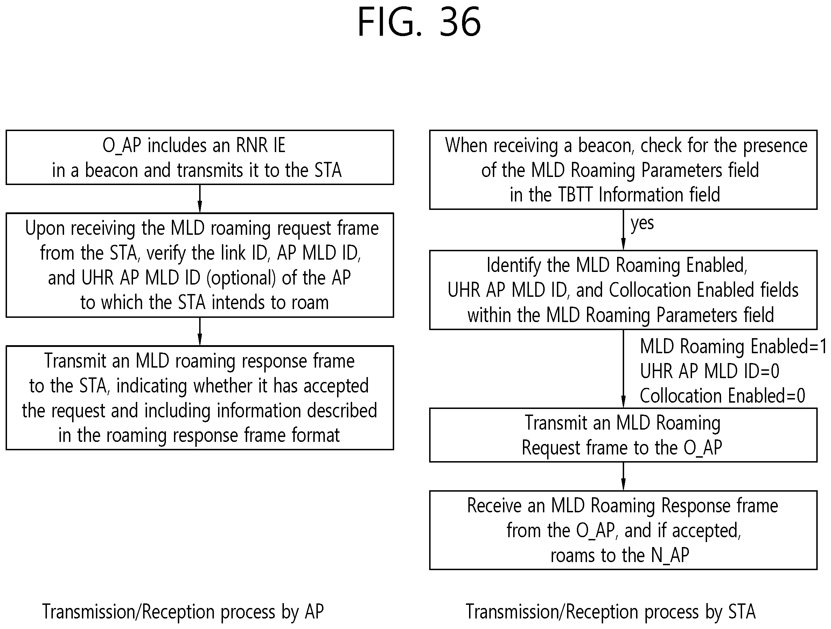

FIG. 36 shows the procedure for determining whether an N_AP is capable of roaming using the Collocation Enabled field.

Referring to FIG. 36, the AP's transmission and reception process is as follows:
The O_AP includes an RNR IE in a beacon and transmits it to the STA. Upon receiving the MLD roaming request frame from the STA, the O_AP verifies the link ID, AP MLD ID, and UHR AP MLD ID (or group ID) (optional) of the AP to which the STA intends to roam. The O_AP then transmits an MLD roaming response frame to the STA, indicating whether it has accepted the request and including information described in the roaming response frame format.

Referring to FIG. 36, the STA's transmission and reception process is as follows:
When the STA receives a beacon, the STA checks for the presence of the MLD Roaming Parameters field in the TBTT Information field. The STA identifies the MLD Roaming Enabled, UHR AP MLD ID (or Group ID), and Collocation Enabled fields within the MLD Roaming Parameters field. At this time, MLD Roaming Enabled is set to 1, UHR AP MLD ID (or Group ID) is set to 0, and Collocation Enabled is set to 0. The STA transmits an MLD Roaming Request frame to the O_AP. The STA receives an MLD Roaming Response frame from the O_AP, and if accepted, roams to the N_AP.

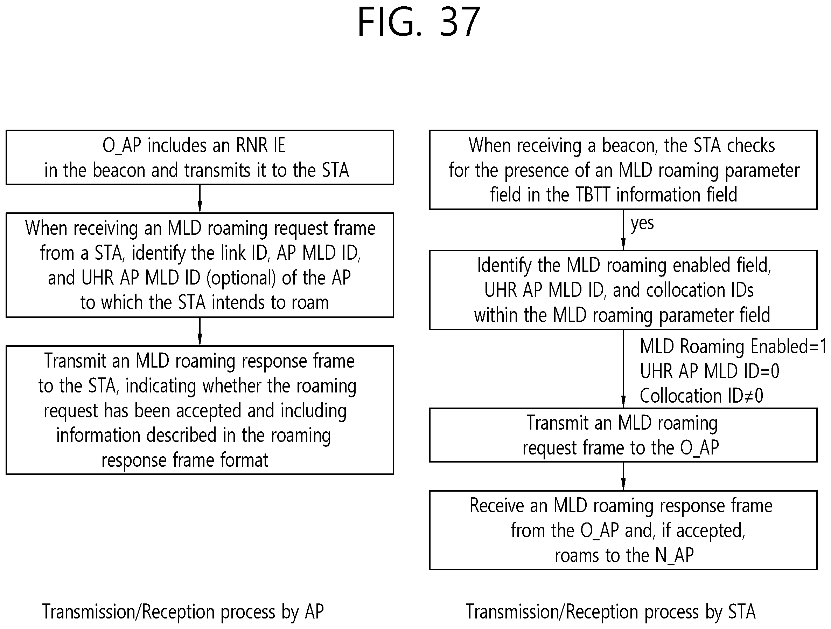

FIG. 37 shows the procedure of determining whether roaming to the N_AP is enabled using the Collocation ID.

Referring to FIG. 37, the AP's transmission and reception process is as follows:
The O_AP includes an RNR IE in the beacon and transmits it to the STA. When an O_AP receives an MLD roaming request frame from a STA, it identifies the link ID, AP MLD ID, and UHR AP MLD ID (or group ID) (optional) of the AP to which the STA intends to roam. The O_AP then transmits an MLD roaming response frame to the STA, indicating whether the roaming request has been accepted and including information described in the roaming response frame format.

Referring to FIG. 37, the STA's transmission and reception process is as follows:
When the STA receives a beacon, the STA checks for the presence of an MLD roaming parameter field in the TBTT information field. The STA identifies the MLD roaming enabled field, UHR AP MLD ID (or group ID), and collocation IDs within the MLD roaming parameter field. At this time, MLD roaming enabled is set to 1, UHR AP MLD ID (or group ID) is set to 0, and the collocation ID is ≠0. The STA then transmits an MLD roaming request frame to the O_AP. The STA receives an MLD roaming response frame from the O_AP and, if accepted, roams to the N_AP.

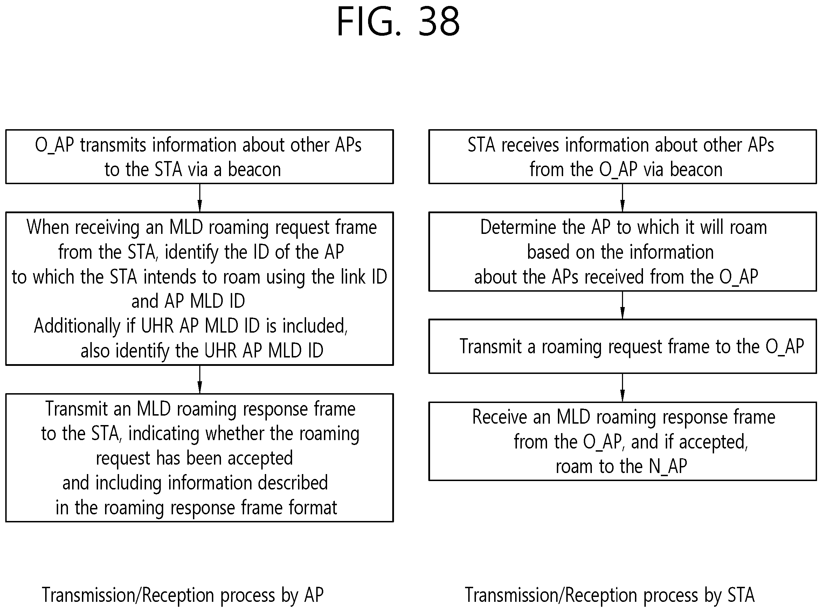

FIG. 38 shows the MLD roaming procedure when the UHR AP MLD ID is included in the reconfiguration element.

Referring to FIG. 38, the AP's transmission and reception process is as follows:
The O_AP transmits information about other APs to the STA via a beacon. When the O_AP receives an MLD roaming request frame from the STA, the O_AP identifies the ID of the AP to which the STA intends to roam using the link ID and AP MLD ID. Additionally, if the MLD roaming request frame includes a UHR AP MLD ID (or group ID), the O_AP also identifies the UHR AP MLD ID (or group ID). The O_AP transmits information regarding acceptance and response information (e.g., information shown in <Table 2>) to the STA via an MLD roaming response frame.

Referring to FIG. 38, the STA's transmission and reception process is as follows:
The STA receives information about other APs from the O_AP via beacon. The STA determines the AP to which it will roam based on the information about the APs received from the O_AP. The STA transmits a roaming request frame to the O_AP. The STA receives an MLD roaming response frame from the O_AP, and if accepted, roams to the N_AP.

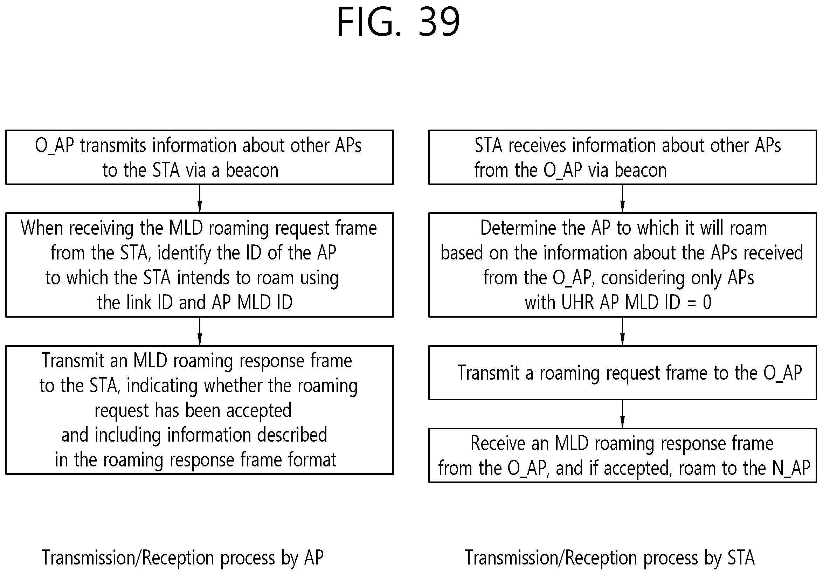

FIG. 39 shows the MLD roaming procedure when the UHR AP MLD ID is not included in the reconfiguration element.

Referring to FIG. 39, the AP transmission and reception process is as follows:
The O_AP transmits information about other APs to the STA via the beacon. When the O_AP receives the MLD roaming request frame from the STA, the O_AP identifies the ID of the AP to which the STA intends to roam using the link ID and AP MLD ID. The O_AP transmits information regarding acceptance and MLD response information (e.g., information illustrated in <Table 2>) to the STA via the MLD roaming response frame.

Referring to FIG. 39, the STA's transmission and reception process is as follows:
The STA receives information about other APs via a beacon from the O_AP. Based on the information about the APs received from the O_AP, the STA determines which AP to roam to. The STA transmits a roaming request frame to the O_AP. The STA receives an MLD roaming response frame from the O_AP, and if accepted, roams to the N_AP.

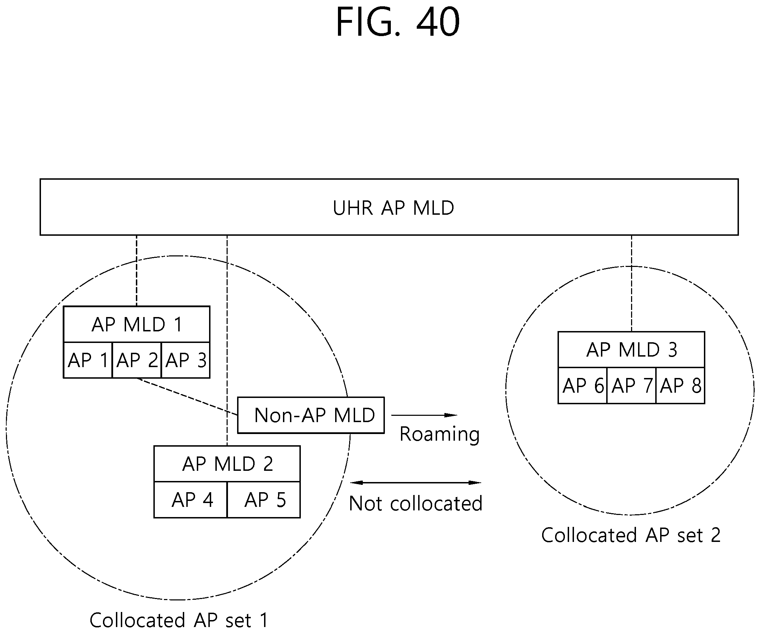

FIG. 40 shows an example of a collocated AP set.

FIG. 40 shows an example of determining whether to roam based on collocation information when a non-AP MLD currently associated with AP 2 moves. Collocation information can be obtained through the Collocation Enabled field or Collocation ID field of the RNR IE. Although APs 4 and 5, which are associated with AP MLD 2, are also present near the non-AP MLD, they are included in the same collocated AP set as AP 2 with which the non-AP MLD is currently associated. Therefore, the non-AP MLD does not make roaming requests to AP 4 and AP 5. Conversely, the non-AP MLD can make roaming requests to APs 6, 7, and 8, which are included in a different collocated AP set from AP 2. By defining collocated AP sets in this way, unnecessary roaming can be prevented by providing information about APs that are physically close and therefore do not require roaming.

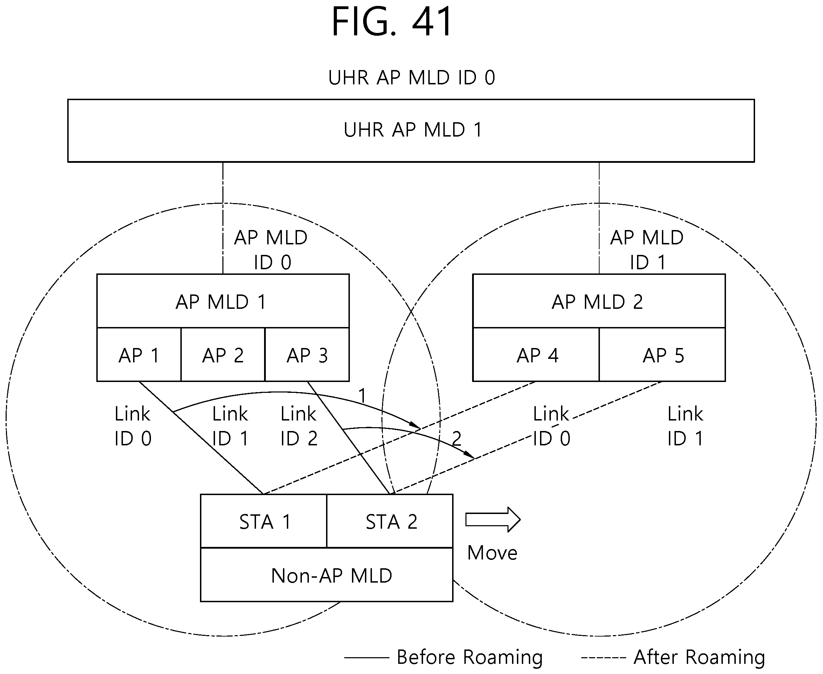

FIG. 41 shows an example 1 of the MLD roaming procedure. Example 1 corresponds to a case where only some STAs roam to an AP first.

Referring to FIG. 41, rather than all STAs simultaneously transitions to APs in a different AP MLD, only some STAs roam to an AP first. For example, STA 1 first roams from AP 1 to AP 3, and then STA 2 roams from AP 3 to AP 5.

In this example, there are two STAs in the non-AP MLD. However, even if there are three STAs, only two STAs can roam first, and the remaining STA can roam later.

In this example, STA 1 and AP 1, as presented above, can exchange MLD roaming requests/responses first. STA 1 will indicate the (optional) UHR AP MLD ID (or group ID), AP MLD ID, and Link ID for AP 4 in the MLD Roaming Request, and AP 1 will include information about AP 4 in the basic multi-link IE along with information for its acceptance decision. Next, STA 2 and AP 3 will perform the same procedure for AP 5. In this case, STA 1 can perform this procedure for AP 4 with which it is associated, instead of STA 2.

This example can be useful for data reception. While AP 1 and STA 1 are roaming, AP 2 and STA 3 can exchange data, and while AP 3 and STA 2 are roaming, AP 4 and STA 1 can exchange data. All TIDs must be mapped to the links on which data is exchanged. However, this example is difficult to apply to STAs other than MLD or when there is only one STA in MLD, and relatively high frame exchange overhead may occur.

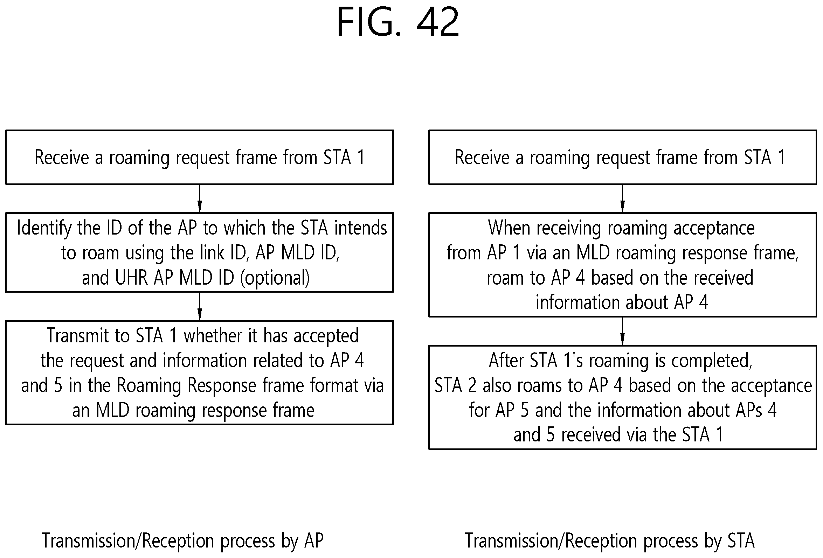

FIG. 42 shows the operational flow of example 1 for the MLD roaming procedure.

Referring to FIG. 42, the AP transmission and reception process is as follows:
AP 1 receives a roaming request frame from STA 1. The AP 1 identifies the ID of the AP to which the STA intends to roam using the link ID, AP MLD ID, and UHR AP MLD ID (or group ID) (optional). AP 1 transmits to STA 1 whether it has accepted the request and response information for APs 4 and 5 (e.g., the information illustrated in <Table 2>) via an MLD roaming response frame.

Referring to FIG. 42, the STA transmission and reception process is as follows:

STA 1 transmits an MLD roaming request frame for APs 4 and 5 to AP 1. When the STA 1 receives roaming acceptance from AP 1 via an MLD roaming response frame, the STA 1 roams to AP 4 based on the received information about AP 4. After STA 1's roaming is completed, STA 2 also roams to AP 4 based on the acceptance for AP 5 and the information about APs 4 and 5 received via the STA 1.

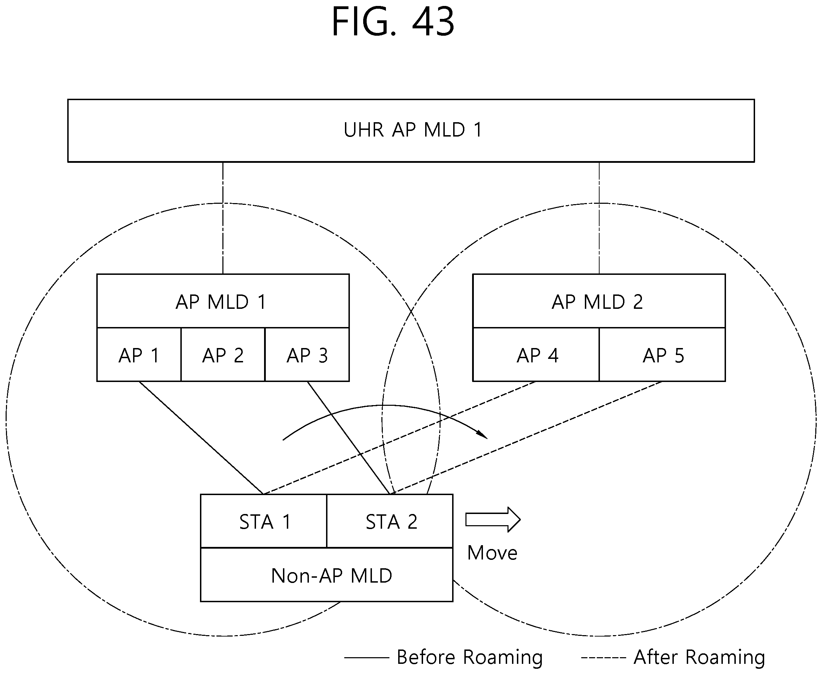

FIG. 43 shows example 2 of the MLD roaming procedure. Example 2 may correspond to a case where all STAs simultaneously move to APs in a different group.

Referring to FIG. 43, all STAs can simultaneously move to APs in a different group. For example, STA 1 can simultaneously roam from AP 1 to AP 3, and STA 2 can simultaneously roam from AP 3 to AP 5.

In this example, either STA 1 and AP 1, or STA 2 and AP 3, as described above, can exchange MLD roaming requests/responses. At this time, the MLD roaming request may indicate the UHR AP MLD ID (or group ID) (optional), AP MLD ID and link ID for AP 4 and AP 5, and AP 1 or AP 3 may include information about AP 4 and AP 5 in the basic multi-link IE along with information for whether to accept the request.

This example can reduce frame overhead compared to example 1 and reduce data delay based on the AP MLD roaming domain structure. However, data reception may be interrupted when the channel is different. To prevent data reception from being interrupted, the UHR AP MLD (or group-managing AP MLD) manages data reception and MLD roaming. If it accepts an MLD roaming request, the data path can be established for roaming in advance. This example only shows the case where two links are switched, but if multiple links are switched, a roaming request can be sent for multiple links at once to request link switch. In this case, link switch can be requested by setting the type field of the Reconfiguration Multi-Link element, or if the frame is not a frame requesting addition or deletion, it can mean a frame requesting a link switch. When MLD roaming request/response frames are transmitted and received between the AP MLD and the non-AP MLD, a link switch is performed to the new roaming AP MLD based on the deletion timer in the reconfiguration ML IE or when the number of beacons equal to the channel switch count in the default ML IE is received from the previous AP MLD.

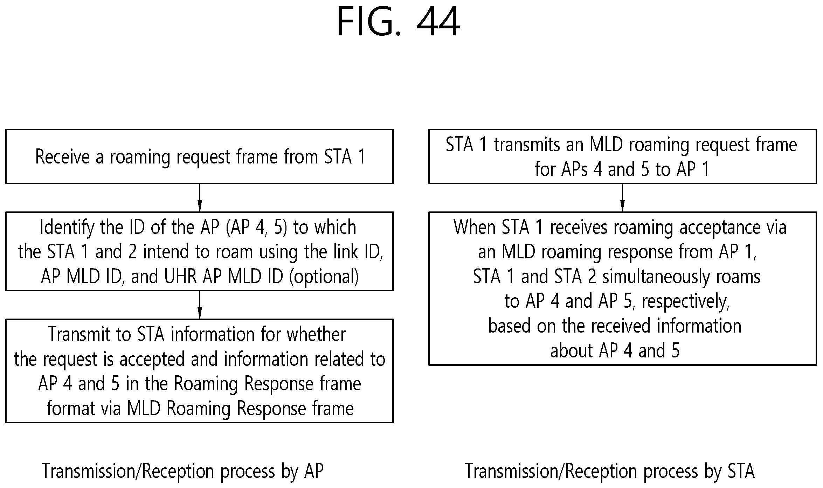

FIG. 44 shows the operational flow of example 2 for the MLD roaming procedure.

Referring to FIG. 44, the AP transmission and reception process is as follows.

AP 1 receives a roaming request frame from STA 1. The AP 1 identifies the ID of the AP to which the STA intends to roam using the link ID, AP MLD ID, and UHR AP MLD ID (or group ID) (optional). AP 1 transmits to STA 1 an MLD roaming response frame indicating acceptance and roaming response information for APs 4 and 5 (e.g., information illustrated in <Table 2>).

Referring to FIG. 44, the STA transmission and reception process is as follows.

STA 1 transmits an MLD roaming request frame for APs 4 and 5 to AP 1. When STA 1 receives roaming acceptance via an MLD roaming response from AP 1, STA 1 roams to AP 4 based on the received information about AP 4. After STA 1's roaming is completed, STA 2 also roams to AP 4 based on the acceptance for AP 5 and the information about APs 4 and 5 received via STA 1

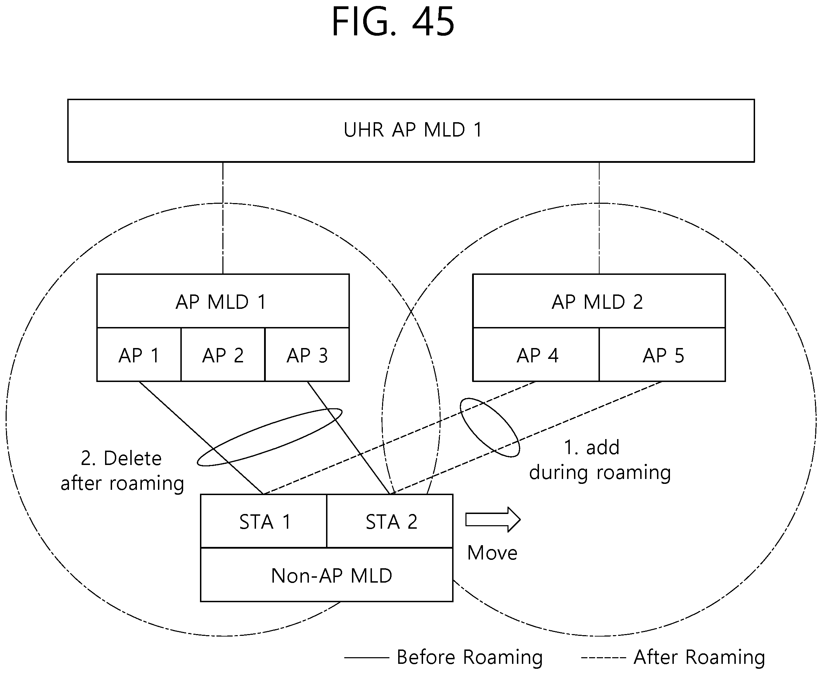

FIG. 45 shows example 3 of the MLD roaming procedure.

FIG. 45 shows an example in which STA 1 temporarily adds AP 4 and STA 2 temporarily adds AP 5, and then deletes AP 1 and AP 3, respectively.

In this example, for the temporary addition presented above, STA 1 and AP 1 or STA 2 and AP 3 can exchange MLD roaming request/response first. At this time, the MLD roaming request may indicate the UHR AP MLD ID (or group ID) (optional), AP MLD ID and link ID for AP 4 and AP 5, and AP 1 or AP 3 may include information about AP 4 and AP 5 in the basic ML IE along with information for whether to accept the request. When this process is completed, STA 1 will be temporarily connected to AP 1 and AP 4, and STA 2 will be connected to AP 3 and AP 5. STA 1 can transmit or receive data from AP 1 and AP 4. That is, when exchanging frames with AP 1, it cannot exchange frames with AP 4. Next, STA 1 and STA 2 perform a temporary deletion (or, delete) operation on AP 1 and AP 3, respectively. Through this procedure, STA 1 roams to AP 4, and STA 2 roams to AP 5.

The above example performs temporary addition and deletion separately. By utilizing a timer, these procedures can be performed simultaneously. For example, STA 1 and AP 1, or STA 2 and AP 3, can exchange MLD roaming requests/responses. At this time, the MLD roaming requests simultaneously request deletion (or temporary deletion) for AP 1 and AP 3, and temporary addition for AP 4 and AP 5. At this time, the MLD roaming timer described above is set. This may be set by the non-AP MLD or the AP MLD through an MLD roaming response, as described above. After the MLD roaming response is successfully transmitted, the timer starts running. When the timer expires, the link to AP 1 is removed from STA 1, and the STA 1 is fully associated with AP 1. STA 2 also removes AP 3, and the STA 2 is fully associated with AP 1.

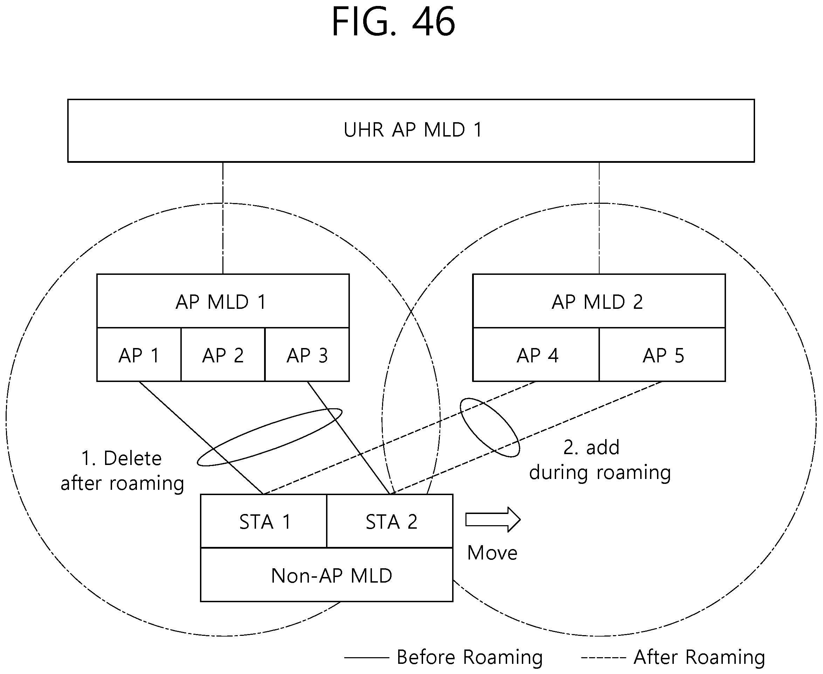

FIG. 46 shows example 4 of the MLD roaming procedure.

Referring to FIG. 46, STA 1 and STA 2 first deletes (or temporarily deletes) AP 4 and AP 5, respectively, and then adds (or temporarily adds) AP 1 and AP 2, respectively.

In this example, for the deletion described above, STA 1 and AP 1, or STA 2 and AP 2, can first exchange MLD Roaming Request/Response. The MLD Roaming Request may indicate the (optional) UHR AP MLD, AP MLD ID, and Link ID for AP 4 and AP 5. AP 1 or AP 2 may then indicate whether to accept this request and include information about AP 4 and AP 5 in the Basic Multi-link IE. After this process is completed, STA 1 or STA 2 can disconnect from AP 1 and AP 3. Even when one link is deleted, if data arrives from an AP for which link deletion has been already performed, a STA that has not yet deleted the link can receive it, or the UHR AP MLD can forward the data to the AP to be roamed to so that the data can be sent after roaming. Next, STA 1 and STA 2 perform an add operation for AP 4 and AP 5, respectively. Through this procedure, STA 1 completes roaming to AP 4, and STA 2 completes roaming to AP 5.

The above example is a procedure in which temporary add and delete operations are performed, respectively. Using a timer allows these procedures to be performed simultaneously. For example, STA 1 and AP 1, or STA 2 and AP 2, can exchange MLD Roaming Request/Response. In this case, the MLD Roaming Request may request both Delete (or Temporary Delete) for AP 1 and AP 2, and Add (or Temporary Add) for AP 4 and AP 5, or they can be transmitted individually. In this case, the MLD Roaming Timer described above is set. This may be set by the non-AP MLD or the AP MLD through an MLD roaming response, as mentioned above. After the MLD Roaming Response is successfully transmitted, a timer starts. When the timer expires, the AP 1 link with the STA 1 is deleted and the STA 1 is completely associated with AP 4, and the AP 3 link with the STA 2 is deleted and the STA 2 is completely associated with AP 5.

FIG. 46 shows example 4 of the MLD roaming procedure.

Referring to FIG. 46, STA 1 and STA 2 first deletes (or temporarily deletes) AP 4 and AP 5, respectively, and then adds (or temporarily adds) AP 1 and AP 2, respectively.

In this example, for the deletion described above, STA 1 and AP 1, or STA 2 and AP 2, can first exchange MLD Roaming Request/Response. The MLD Roaming Request may indicate the (optional) UHR AP MLD, AP MLD ID, and Link ID for AP 4 and AP 5. AP 1 or AP 2 may then indicate whether to accept this request and include information about AP 4 and AP 5 in the Basic Multi-link IE. After this process is completed, STA 1 or STA 2 can disconnect from AP 1 and AP 3. Even when one link is deleted, if data arrives from an AP for which link deletion has been already performed, a STA that has not yet deleted the link can receive it, or the UHR AP MLD can forward the data to the AP to be roamed to so that the data can be sent after roaming. Next, STA 1 and STA 2 perform an add operation for AP 4 and AP 5, respectively. Through this procedure, STA 1 completes roaming to AP 4, and STA 2 completes roaming to AP 5.

The above example is a procedure in which temporary add and delete operations are performed, respectively. Using a timer allows these procedures to be performed simultaneously. For example, STA 1 and AP 1, or STA 2 and AP 2, can exchange MLD Roaming Request/Response. In this case, the MLD Roaming Request may request both Delete (or Temporary Delete) for AP 1 and AP 2, and Add (or Temporary Add) for AP 4 and AP 5, or they can be transmitted individually. In this case, the MLD Roaming Timer described above is set. This may be set by the non-AP MLD or the AP MLD through an MLD roaming response, as mentioned above. After the MLD Roaming Response is successfully transmitted, a timer starts. When the timer expires, the AP 1 link with the STA 1 is deleted and the STA 1 is completely associated with AP 4, and the AP 3 link with the STA 2 is deleted and the STA 2 is completely associated with AP 5.

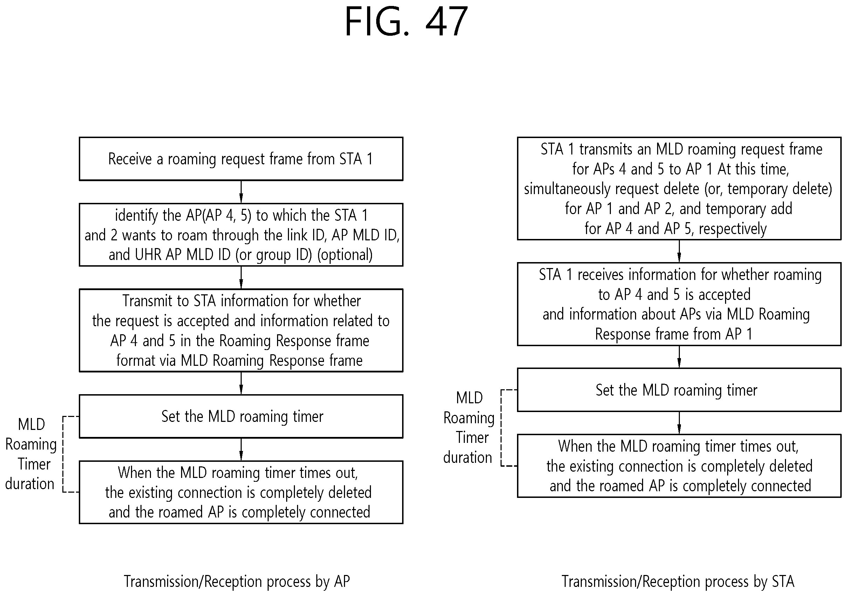

FIG. 47 shows the operational flows of examples 3 and 4 for the MLD roaming procedure.

Referring to FIG. 47, the transmission and reception process of the AP is as follows.

AP 1 receives a roaming request frame from STA 1. The AP 1 identifies the AP to which the STA 1 wants to roam through the link ID, AP MLD ID, and UHR AP MLD ID (or group ID) (optional). AP 1 sends to STA 1 information for whether to accept the request and roaming response information for APs 4 and 5 (e.g., information as illustrated in Table 2) through an MLD roaming response frame. AP 1 sets the MLD roaming timer. At this time, when the MLD roaming timer times out/expires, the existing connection is completely deleted and the roamed AP is completely connected.

Referring to FIG. 47, the STA transmission and reception process is as follows.

STA 1 transmits an MLD roaming request frame for APs 4 and 5 to AP 1. If STA 1 receives roaming acceptance from AP 1 by receiving an MLD roaming response frame, STA 1 roams to AP 4 based on the received information about AP 4. After STA 1's roaming is completed, STA 2 also roams to AP 5 based on the acceptance for AP 5 and the information about APs 4 and 5 received via STA 1. STA 1 sets an MLD roaming timer. When the MLD roaming timer times out/expires, the existing connection is completely deleted and the roamed AP is completely connected.

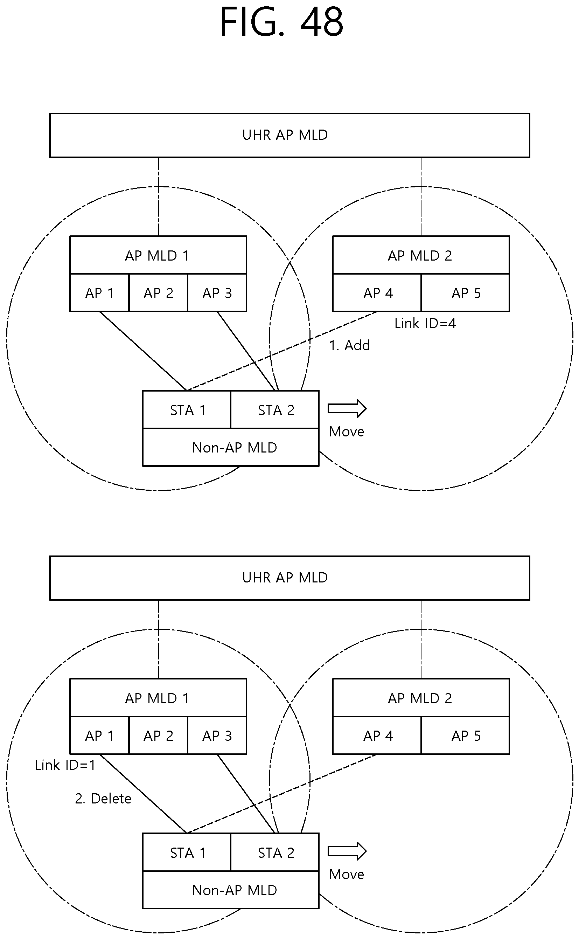

FIG. 48 shows an example of how to set the type field of an MLD roaming request frame when simultaneously transmitting link addition and deletion requests.

Referring to FIG. 48, in order for a non-AP MLD to roam to a new AP MLD (AP MLD 2), it first requests link addition, and then a link is established between STA 1 and AP 4, and then requests deletion of the connection with AP 1, which is the existing connection of STA 1. When requesting link addition and deletion, the link ID and AP MLD ID can be used to indicate the AP for which the request is sent. When the deletion request is sent and the connection between STA 1 and AP 1 is completely deleted, STA 1 cannot transmit and receive data with AP MLD 1, but STA 2 of the non-AP MLD is connected to AP 3 of AP MLD 1, so the non-AP MLD and AP MLD 1 can transmit and receive data. Therefore, data discontinuity can be reduced during roaming. After STA 1's link switch is completed, STA 2 can also request a link addition to AP 5, then disconnect from AP 3 and completely roam to the new AP MLD 2. At this time, since AP MLD 1 and AP MLD 2 are associated with the same UHR AP MLD (or AP MLD for seamless roaming) (or are included in the same roaming group), data queued in AP MLD 1 can be transferred to AP MLD 2.

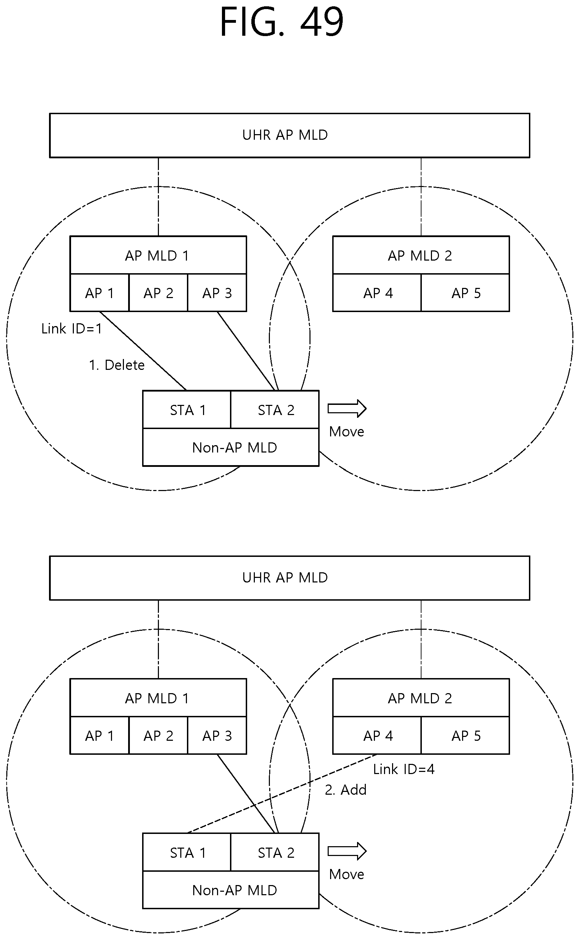

FIG. 49 shows another example of a method for setting the type field of an MLD roaming request frame when simultaneously transmitting link addition and deletion requests.

The roaming procedure in FIG. 49 is generally the same as the roaming procedure in FIG. 48, except that it differs in that the link is deleted first and then a link with AP MLD 2 is added.

When adding and then deleting a link (e.g., FIG. 48) or when deleting and then adding a link (e.g., FIG. 49), two requests can be made by transmitting the MLD roaming request frame separately, or both operations can be requested together through a single frame transmission. When requesting both addition and deletion together and intending to add a new link first and delete an existing link later (e.g., FIG. 48), the MLD roaming request frame can be configured in the corresponding method described above. When requesting both addition and deletion together and intending to delete an existing link first and add a new link later (e.g., FIG. 49), the MLD roaming request frame can be configured in the corresponding method described above. That is, the link information field can include two Per-STA profiles (one Per-STA profile for addition and one Per-STA profile for deletion). When requesting addition and deletion separately, the MLD Roaming Request frame including the addition/deletion request can be configured so that the type field is 1) included in the body of the MLD Roaming Request frame or the common information field of the reconfiguration ML IE, or 2) included in the body of the MLD Roaming Request frame or the link information field of the reconfiguration ML IE, as described above. Thereafter, a response to the request is received as an MLD Roaming Response frame, and the status code indicates whether the MLD Roaming Request frame is accepted or rejected.

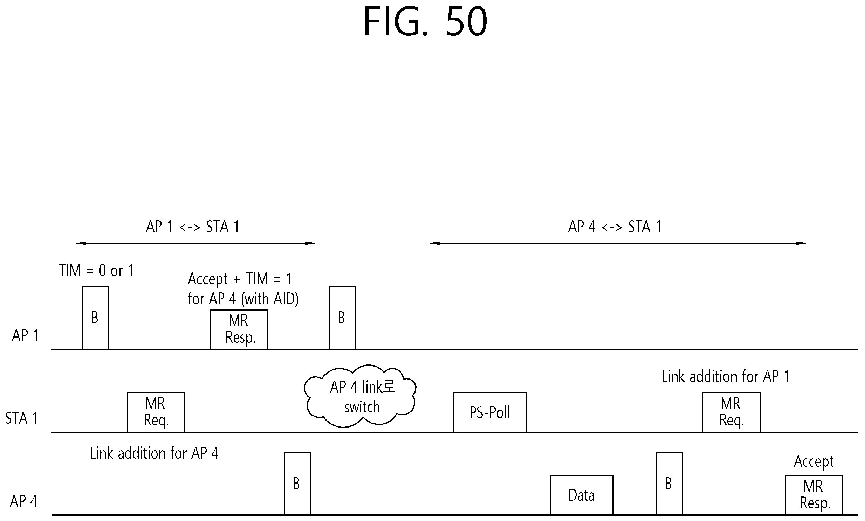

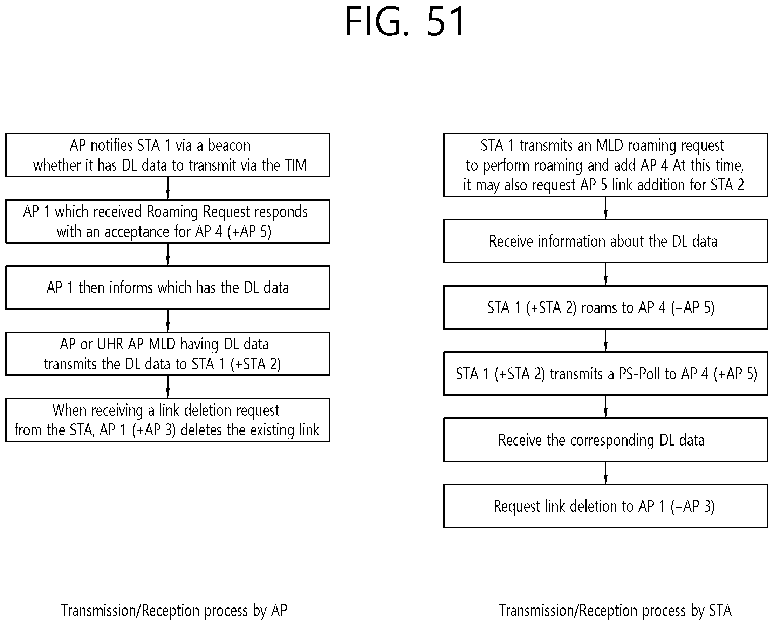

Furthermore, for STA 1 to completely transition from AP 1 to AP 4, processes such as those shown in FIGs. 50 and 51 are required.

FIG. 50 shows an example of MLD roaming using TIM.

AP 1 can notify STA 1 via a beacon whether it has DL data to transmit via TIM. At this time, STA 1 transmits an MLD roaming request to add AP 4 for roaming. While this example only describes STA 1, a link addition request for the link between STA 2 and AP 5, as shown in FIG. 41, can also be requested. AP 1 confirms this and responds with acceptance for AP 4. However, STA 1 may have received information indicating that no DL data is buffered, or even if the data is buffered, it may not have been received yet, from the beacon of AP 1. Therefore, AP 1 can notify STA 1 that AP 4 or the UHR AP MLD has the corresponding DL data. That is, when switching to AP 4, STA 1 can immediately receive DL data from AP 4 via a PS-poll transmission without waiting for a beacon. To achieve this, additional information must be included in the MLD roaming response frame, including the following:

- Traffic Indication Map (TIM) field (e.g., 1 bit): This field indicates that the corresponding AP or AP MLD is currently buffering DL data for the requesting STA.

From an MLD-level perspective, if the UHR AP MLD indicates that it is buffering DL data for the requesting STA, the TIM field can be included in the MLD roaming response frame's body or the common information field.

From the AP perspective, for example, if AP 4 indicates that it has DL data before switching to AP 4, the TIM field can be included in the link information field.

Meanwhile, a STA (e.g., STA 1) can additionally use the MLD roaming timer in the MLD roaming response frame to determine the switch time. For example, if there is still sufficient time before STA 1 receives data from the AP to which it will roam (e.g., AP 4) prior to switching, STA 1 may first receive the DL data from the currently connected AP (e.g., AP 1) through a PS-Poll, if necessary, and then perform the switching. Alternatively, if STA 1 can receive data from AP 4 at the current time by switching immediately, STA 1 may perform the switching immediately.

FIG. 51 shows the operational flow for the MLD roaming procedure using the TIM.

Referring to FIG. 51, the AP transmission and reception process is as follows:

AP 1 notifies STA 1 via a beacon whether it has DL data to transmit via the TIM. When the AP 1 receives the roaming request, AP 1 responds with an acceptance for AP 4 (+AP 5). AP 1 then informs STA 1 which has the DL data. An AP or UHR AP MLD having DL data transmits the DL data to STA 1 (+STA 2). When the AP 1 receives a link deletion request from the STA, AP 1 (+AP 3) deletes the existing link.

Referring to FIG. 51, the STA transmission and reception process is as follows:
STA 1 transmits an MLD roaming request to perform roaming and add AP 4. At this time, it may also request the link addition to AP 5 for STA 2. STA 1 receives information about the DL data. STA 1 (+STA 2) roams to AP 4 (+AP 5). STA 1 (+STA 2) transmits a PS-Poll to AP 4 (+AP 5) and receives the corresponding DL data. STA 1 (+STA 2) requests link deletion to AP 1 (+AP 3).

The technical features of the present disclosure described above can be applied to various devices and methods. For example, the technical features of the present disclosure described above can be performed/supported by the devices of FIG. 1 and/or FIG. 5. For example, the technical features of the present disclosure described above can be applied only to a part of FIG. 1 and/or FIG. 5. For example, the technical features of the present disclosure described above can be implemented based on the processing chips 114, 124 of FIG. 1, or implemented based on the processors 111, 121 and the memories 112, 122 of FIG. 1, or implemented based on the processor 510 and the memory 520 of FIG. 5.

For example, the processor 111, the processing chip 114 of FIG. 1 and/or the processor 510 of FIG. 5 may be configured to execute instructions stored in the memory 112, 520 to implement the method performed by the STA in the present disclosure. The method comprises: performing an association procedure for the STA and a first access point (AP) included in a roaming group; receiving, from the first AP, a list of APs for which roaming is recommended in the roaming group; transmitting, to the first AP, a roaming request frame including information for a second AP for which roaming is preferred by the STA in the list of APs for which roaming is recommended; receiving, from the first AP, a roaming response frame including information informing that roaming of the STA to the second AP is accepted; and performing roaming to the second AP based on receiving the roaming response frame.

For example, the processor 121 and/or processing chip 124 of FIG. 1 may be configured to execute instructions stored in the memory 122 to implement the method performed by the first AP in the present disclosure. The method comprises: performing an association procedure for a station (STA) and the first AP included in a roaming group; transmitting, to the STA, a list of APs for which roaming is recommended in the roaming group; receiving, from the STA, a roaming request frame including information for a second AP for which roaming is preferred by the STA in the list of APs for which roaming is recommended; and transmitting, to the STA, a roaming response frame including information informing that roaming of the STA to the second AP is accepted.

The technical features of the present disclosure can be implemented based on a computer readable medium (CRM) (e.g., non-transitory CRM). For example, the CRM in the present disclosure may comprise at least one CRM having stored thereon a program code implementing instructions executed by at least one processor.

For example, the CRM may be the memory 112 of FIG. 1, the memory 520 of FIG. 5, and/or a separate external memory/storage medium/disk. The CRM may store instructions that implement the method performed by the STA in the present disclosure based on being executed by a processor (e.g., the processor 111, the processing chip 114 of FIG. 1, and/or the processor 510 of FIG. 5). The method comprises: performing an association procedure for the STA and a first access point (AP) included in a roaming group; receiving, from the first AP, a list of APs for which roaming is recommended in the roaming group; transmitting, to the first AP, a roaming request frame including information for a second AP for which roaming is preferred by the STA in the list of APs for which roaming is recommended; receiving, from the first AP, a roaming response frame including information informing that roaming of the STA to the second AP is accepted; and performing roaming to the second AP based on receiving the roaming response frame.

For example, the CRM may be the memory 122 of FIG. 1 and/or a separate external memory/storage medium/disk. The CRM may store instructions that implement the method performed by the first AP in the present disclosure based on being executed by a processor (e.g., the processor 121 and/or the processing chip 124 of FIG. 1). The method comprises: performing an association procedure for a station (STA) and the first AP included in a roaming group; transmitting, to the STA, a list of APs for which roaming is recommended in the roaming group; receiving, from the STA, a roaming request frame including information for a second AP for which roaming is preferred by the STA in the list of APs for which roaming is recommended; and transmitting, to the STA, a roaming response frame including information informing that roaming of the STA to the second AP is accepted.

The foregoing technical features of this disclosure are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The present disclosure may have various advantageous effects.

For example, the AP can appropriately determine and provide a list of APs recommended for roaming to the STA based on information for APs capable of roaming recommendations, and the STA can perform roaming quickly and stably to a preferred AP based on the list of APs recommended for roaming.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus, and technical features in method claim(s) and apparatus claim(s) can be combined to be implemented or performed in a method.

## Claims

1. A method comprising:
performing an association procedure for a station (STA) and a first access point (AP) included in a roaming group;
receiving, from the first AP, a list of APs for which roaming is recommended in the roaming group;
transmitting, to the first AP, a roaming request frame including information for a second AP for which roaming is preferred by the STA in the list of APs for which roaming is recommended;
receiving, from the first AP, a roaming response frame including information informing that roaming of the STA to the second AP is accepted; and
performing roaming to the second AP based on receiving the roaming response frame.

2. The method of claim 1, further comprising transmitting, to the first AP, a probe request frame including information for APs for which roaming recommendation is enabled,
wherein the receiving of the list of APs for which roaming is recommended comprises receiving, from the first AP, a probe response frame including the list of APs for which roaming is recommended among the APs for which roaming recommendation is enabled.

3. The method of claim 2, further comprising receiving, from the first AP, a management frame including information for APs to which roaming is enabled,
wherein the information for the APs to which roaming is enabled is included in a reduced neighbor report (RNR) information element (IE) of the management frame, and
wherein the APs for which roaming recommendation is enabled are selected from among the APs to which roaming is enabled.

4. The method of claim 2, wherein the probe request frame is a multi-link (ML) probe request frame including a probe request ML information element (IE),
wherein the probe response frame is an ML probe response frame including a basic ML IE,
wherein the information for the APs for which roaming recommendation is enabled is included in the probe request ML IE, and
wherein the list of APs for which roaming is recommended is included in the basic ML IE.

5. The method of claim 4, wherein the information for the APs for which roaming recommendation is enabled includes a roaming recommendation enabled field for the APs for which roaming recommendation is enabled, and
wherein the roaming recommendation enabled field is included in a common information field of the probe request ML IE.

6. The method of claim 5, wherein a presence bitmap subfield of the probe request ML IE includes a field indicating that the roaming recommendation enabled field is included in the common information field of the probe request ML IE.

7. The method of claim 4, wherein the information for the APs for which roaming recommendation is enabled includes a roaming recommendation enabled field for each of the APs for which roaming recommendation is enabled, and
wherein the roaming recommendation enabled field is included in a per-STA profile subelement for a corresponding AP in a link information field of the probe request ML IE.

8. The method of claim 7, wherein the roaming recommendation enabled field is included in a STA control field of the per-STA profile subelement for the corresponding AP.

9. The method of claim 7, wherein the roaming recommendation enabled field is included in a STA information field of the per-STA profile subelement for the corresponding AP.

10. The method of claim 9, wherein the STA control field of the per-STA profile subelement for the corresponding AP includes a field indicating that the roaming recommendation enabled field is included in the STA information field.

11. The method of claim 1, wherein the receiving of the list of APs for which roaming is recommended comprises receiving, from the first AP, a beacon frame including the list of APs for which roaming is recommended.

12. The method of claim 1, wherein the list of APs for which roaming is recommended includes a list of link identifiers (IDs) associated with the APs for which roaming is recommended.

13. The method of claim 1, wherein the information for the second AP includes at least one of a link identifier (ID) associated with the second AP or an AP multi-link device (MLD) ID with which the second AP is affiliated.

14. The method of claim 1, wherein at least one of the information for the second AP or the roaming request frame includes a group identifier (ID) for the roaming group.

15. The method of claim 1, wherein the performing of roaming to the second AP comprises performing a link switch to the second AP while maintaining an association state.

16. A station (STA) in a wireless local area network (LAN) system, comprising:
a transceiver;
a memory; and
at least one processor operatively coupled to the transceiver and the memory,
wherein the memory stores instructions that, based on being executed by the at least one processor, perform operations comprising:
performing an association procedure for the STA and a first access point (AP) included in a roaming group;
receiving, from the first AP, a list of APs for which roaming is recommended in the roaming group;
transmitting, to the first AP, a roaming request frame including information for a second AP for which roaming is preferred by the STA in the list of APs for which roaming is recommended;
receiving, from the first AP, a roaming response frame including information informing that roaming of the STA to the second AP is accepted; and
performing roaming to the second AP based on receiving the roaming response frame.

17. An apparatus configured to operate in a wireless local area network (LAN) system, comprising:
at least one processor; and
at least one memory operatively coupled to the at least one processor,
wherein the at least one memory stores instructions that, based on being executed by the at least one processor, perform operations comprising:
performing an association procedure for a station (STA) and a first access point (AP) included in a roaming group;
receiving, from the first AP, a list of APs for which roaming is recommended in the roaming group;
transmitting, to the first AP, a roaming request frame including information for a second AP for which roaming is preferred by the STA in the list of APs for which roaming is recommended;
receiving, from the first AP, a roaming response frame including information informing that roaming of the STA to the second AP is accepted; and
performing roaming to the second AP based on receiving the roaming response frame.

18. A non-transitory computer readable medium (CRM) having stored thereon a program code implementing instructions that, based on being executed by at least one processor, perform operations comprising:
performing an association procedure for a station (STA) and a first access point (AP) included in a roaming group;
receiving, from the first AP, a list of APs for which roaming is recommended in the roaming group;
transmitting, to the first AP, a roaming request frame including information for a second AP for which roaming is preferred by the STA in the list of APs for which roaming is recommended;
receiving, from the first AP, a roaming response frame including information informing that roaming of the STA to the second AP is accepted; and
performing roaming to the second AP based on receiving the roaming response frame.

19. A method comprising:
performing an association procedure for a station (STA) and a first access point (AP) included in a roaming group;
transmitting, to the STA, a list of APs for which roaming is recommended in the roaming group;
receiving, from the STA, a roaming request frame including information for a second AP for which roaming is preferred by the STA in the list of APs for which roaming is recommended; and
transmitting, to the STA, a roaming response frame including information informing that roaming of the STA to the second AP is accepted.

20. A first access point (AP) in a wireless local area network (LAN) system, comprising:
a transceiver;
a memory; and
at least one processor operatively coupled to the transceiver and the memory,
wherein the memory stores instructions that, based on being executed by the at least one processor, perform operations comprising:
performing an association procedure for a station (STA) and the first AP included in a roaming group;
transmitting, to the STA, a list of APs for which roaming is recommended in the roaming group;
receiving, from the STA, a roaming request frame including information for a second AP for which roaming is preferred by the STA in the list of APs for which roaming is recommended; and
transmitting, to the STA, a roaming response frame including information informing that roaming of the STA to the second AP is accepted.
